# EUROPÄISCHE PATENTANMELDUNG

(11) **EP 1 905 302 A1**
(43) Veröffentlichungstag der Anmeldung: **02.04.2008**
(21) Anmeldenummer: 06020677.8
(22) Anmeldetag: 30.09.2006
(51) Int. Cl.: A01N 51/00, A01N 47/40, A01N 47/06, A01N 25/02, A01N 25/04, A01N 25/30, A01P 7/04

(54) **Suspensionskonzentrate**

(71) Anmelder: Bayer CropScience AG, 40789 Monheim (DE)
(72) Erfinder: Vermeer, Ronald, Dr., 51371 Leverkusen (DE); Baur, Peter, Prof. Dr., 86938 Schondorf (DE)

(57) **Zusammenfassung**

Die vorliegende Erfindung betrifft neue Suspensionskonzentrate von bestimmten agrochemischen Wirkstoffen enthaltend einen festen Wirkstoff, vorzugsweise ein Neonicotinoid oder Spirotetramat, mindestens einen Penetrationsförderer wie einen alkoxylierten Alkohol oder ein Polyalkoxytriglyzerid und ein Adjuvans aus der Gruppe der Polyglyzerine und Polyglizerinderivate, ein Verfahren zur Herstellung dieser Formulierungen und deren Verwendung zur Applikation der enthaltenen Wirkstoffe.

## Beschreibung

Die vorliegende Erfindung betrifft neue Suspensionskonzentrate von bestimmten agrochemischen Wirkstoffen, ein Verfahren zur Herstellung dieser Formulierungen und deren Verwendung zur Applikation der enthaltenen Wirkstoffe.

Systemische agrochemische Wirkstoffe, insbesondere systemische Insektizide und Fungizide, brauchen zur Entfaltung der biologischen Wirkung eine Formulierung, welche es ermöglicht, dass die Wirkstoffe in die Pflanze / den Zielorganismen aufgenommen werden. Üblicherweise werden deshalb systemische agrochemische Wirkstoffe als Emulsionskonzentrat (EC), Soluble Liquid (SL) und / oder ölbasierendes Suspensionskonzentrat (OD) formuliert. In einer EC- und SL-Formulierung liegt der Wirkstoff in gelöster Form vor, bei einer OD-Formulierung als Feststoff. Auch ein Suspensionskonzentrat (SC) ist in der Regel technisch möglich. Bei der Verwendung von SC-Formulierungen ist es jedoch zur Erreichung einer ausreichenden biologischen Wirkung notwendig, dass der Wirkstoff im SC mit einem Adjuvans kombiniert wird. Ein Adjuvans in diesem Zusammenhang ist eine Komponente, welche die biologische Wirkung der Wirkstoff verbessert, ohne selbst eine biologische Wirkung zu zeigen. Insbesondere ermöglicht / fördert ein Adjuvans die Aufnahme des Wirkstoffes in das Blatt. Ein Adjuvans kann in die Formulierung des agrochemischen Wirkstoffs eingebaut werden (In-can-Formulierung) oder nach Verdünnen der konzentrierten Formulierung der Spritzbrühe zugegeben werden (Tank-Mix). Zur Vermeidung von Dosierungsfehlern und zur Verbesserung der Sicherheit der Benutzer bei der Anwendung von agrochemischen Produkten ist es vorteilhaft, die Adjuvantien in die Formulierung einzubauen. Weiterhin wird dadurch die unnötige Verwendung von extra Verpackungsmaterial für den Tank-Mix Produkten vermieden.

Es sind bereits einige wasserbasierte Suspensionskonzentrate von agrochemischen Wirkstoffen, welche Adjuvantien enthalten, bekannt geworden. So werden in WO 05/036963 Formulierungen dieses Typs beschrieben, die neben bestimmten Fungiziden auch mindestens einen Penetrationsförderer aus der Gruppe der Alkanolethoxylate enthalten. In WO 99/060851 sind verschiedenste Alkanolethoxylate auf Basis von Fettalkoholen beschrieben.

Nachteil der oben genannten Formulierungen mit Additiven ist, dass obwohl die biologische Wirkung signifikant verbessert wurde, die Wirksamkeit dieser Formulierungen schwächer ist als diejenige von Spritzmitteln, die durch Verdünnung entsprechender Emulsionskonzentrate mit Wasser zugänglich sind.

Der vorliegenden Erfindung liegt die Aufgabe zugrunde hoch wirksame, stabile, lagerbare, wasserbasierende Suspensionskonzentrate zu entwickeln, welche die Aufnahme des Wirkstoffs durch die Kutikula im Vergleich zu den bekannten Formulierungen verbessern.

Es wurde gefunden, dass im Wasser dispergierbare agrochemische Formulierungen enthaltend einen Penetrationsförderer in Kombination mit einem Adjuvans aus der Gruppe der Polyglyzerine oder Polyglyzerinderivate dieses Problem lösen. Gegenstand der vorliegenden Erfindung sind also im Wasser dispergierbare agrochemische Formulierungen, enthaltend
- mindestens einen bei Raumtemperatur festen systemischer Wirkstoff,
- mindestens einen Penetrationsförderer,
- mindestens ein Adjuvans aus der Gruppe der Polyglyzerine oder Polyglyzerinderivate,
- mindestens ein nicht-ionisches Tensid und/oder mindestens ein anionisches Tensid und
- gegebenenfalls einen oder mehrere Zusatzstoffen aus den Gruppen der Frostschutzmittel, der schaumhemmenden Mittel, der Konservierungsmittel, der Antioxidantien, der Spreitmittel, der Farbstoffe und/oder einen Verdicker.

Als Penetrationsförderer kommen im vorliegenden Zusammenhang alle diejenigen wasserlöslichen / -mischbaren Substanzen in Betracht, die üblicherweise eingesetzt werden, um das Eindringen von agrochemischen Wirkstoffen in Pflanzen zu verbessern. Penetrationsförderer werden in diesem Zusammenhang dadurch definiert, dass sie aus der wässerigen Spritzbrühe und/oder aus dem Spritzbelag in die Kutikula der Pflanze eindringen und dadurch die Stoffbeweglichkeit (Mobilität) von Wirkstoffen in der Kutikula erhöhen können. Die nachher und in der Literatur (Baur et al., 1997, Pesticide Science 51, 131-152) beschriebene Methode kann zur Bestimmung dieser Eigenschaft eingesetzt werden.

Weiterhin wurde gefunden, dass sich die erfindungsgemäßen Suspensionskonzentrate auf Wasserbasis herstellen lassen, indem man
- mindestens einen bei Raumtemperatur festen systemischer Wirkstoff,
- mindestens einen Penetrationsförderer,
- mindestens ein Adjuvans aus der Gruppe der Polyglyzerine oder Polyglyzerinderivate,
- mindestens ein nicht-ionisches Tensid und/oder mindestens ein anionisches Tensid und
- gegebenenfalls einen oder mehrere Zusatzstoffen aus den Gruppen der Frostschutzmittel, der schaumhemmenden Mittel, der Konservierungsmittel, der Antioxydantien, der Spreitmittel, der Farbstoffe und/oder einen Verdicker
miteinander vermischt und die entstehende Suspension gegebenenfalls anschließend mahlt.

Schließlich wurde gefunden, dass sich die erfindungsgemäßen Suspensionskonzentrate sehr gut zur Applikation der enthaltenen agrochemischen Wirkstoffe auf Pflanzen und/oder deren Lebensraum eignen.

Es ist als äußerst überraschend zu bezeichnen, dass die erfindungsgemäßen Suspensionskonzentrate eine verbesserte Wirkung zeigen im Vergleich zu diejenige von Spritzmittel, die durch Verdünnung entsprechender Emulsionskonzentrate mit Wasser zugänglich sind.

Weiterhin ist es als sehr überraschend zu bezeichnen, dass die Verwendung von Penetrationsförderern eine synergistische Wirkung zeigt in Kombination mit den erfindungsgemäßen Adjuvantien aus der Gruppe der Polyglyzerine oder Polyglyzerinderivate.

Zuletzt ist es als äußerst überraschend zu bezeichnen, dass die erfindungsgemäßen Suspensionskonzentrate eine sehr gute Stabilität aufweisen. Die angewendeten Penetrationsförderer haben ebenso wie die Dispergiermittel eines wasserbasierten Suspensionskonzentrats oberflächeaktive Eigenschaften, was normalerweise zur Konkurrenz mit den Dispergiermitteln führt. Dieses führt speziell bei hoher Lagertemperatur oder nach Lagerung bei wechselnden Temperaturbedingungen zur Destabilisierung des Suspensionskonzentrats.

Im Folgenden werden bevorzugte Ausführungsformen des Erfindungsgegenstandes beschrieben.

Als Wirkstoffe können in den erfindungsgemäßen Formulierungen alle bei Raumtemperatur festen agrochemischen Wirkstoffe eingesetzt werden.

Bevorzugt sind systemisch wirkende Fungizide und Insektizide.

Besonders bevorzugt sind folgende Fungizide:
Inhibitoren der Nucleinsäure Synthese
   Benalaxyl, Benalaxyl-M, Bupirimat, Chiralaxyl, Clozylacon, Dimethirimol, Ethirimol, Furalaxyl, Hymexazol, Mefenoxam, Metalaxyl, Metalaxyl-M, Ofurace, Oxadixyl, Oxolinsäure
Inhibitoren der Mitose und Zellteilung
   Benomyl, Carbendazim, Diethofencarb, Fuberidazole, Thiabendazol, Thiophanatmethyl,
Inhibitoren der Atmungskette Komplex II
   Boscalid, Carboxin, Fenfuram, Flutolanil, Furametpyr, Furmecyclox, Mepronil, Oxycarboxin,
Inhibitoren der Atmungskette Komplex III
   Azoxystrobin, Cyazofamid, Dimoxystrobin, Enestrobin, Famoxadon, Fenamidon, Fluoxastrobin, Kresoximmethyl, Metominostrobin, Orysastrobin, Pyraclostrobin, Picoxystrobin, Trifloxystrobin
Inhibitoren der ATP Produktion
   Fentinacetat, Fentinchlorid, Fentinhydroxid,
Inhibitoren der Aminosäure- und Proteinbiosynthese
   Andoprim, Cyprodinil, Kasugamycin, Kasugamycinhydrochlorid Hydrat, Pyrimethanil
Inhibitoren der Signal-Transduktion
   Fludioxonil, Quinoxyfen
Inhibitoren der Fett- und Membran Synthese
   Chlozolinat, Iprodion, Procymidon, Vinclozolin
   Ampropylfos, Kalium-Ampropylfos, Edifenphos, Etridiazol, Iprobenfos (IBP), Isoprothiolan, Pyrazophos
   Biphenyl
   Iodocarb, Propamocarb, Propamocarb hydrochlorid, Propamocarb-Fosetylat
Inhibitoren der Ergosterol Biosynthese
   Azaconazol, Bitertanol, Bromuconazol, Cyproconazol, Diclobutrazol, Difenoconazol, Diniconazol, Diniconazol-M, Epoxiconazol, Etaconazol, Fenarimol, Fenbuconazol, Fluquinconazol, Flurprimidol, Flusilazol, Flutriafol, Furconazol, Furconazol-cis, Hexaconazol, Imazalil, Imazalilsulfat Imibenconazol, Ipconazol, Metconazol, Myclobutanil, Nuarimol, Oxpoconazol, Paclobutrazol, Penconazol, Pefurazoat Prochloraz, Propiconazol, Prothioconazol, Pyrifenox, Simeconazol, Tebuconazol, Tetraconazol, Triadimefon, Triadimenol, Triflumizol, Triforin, Triticonazol, Uniconazol, Voriconazol, Viniconazol,
   Aldimorph, Dodemorph, Dodemorphacetat, Fenpropidin, Fenpropimorph, Spiroxamin, Tridemorph,
   Naftifin, Terbinafin
Inhibitoren der Zellwand Synthese
   Benthiavalicarb, Dimethomorph, Flumorph, Iprovalicarb, Mandipropamid, Polyoxins, Polyoxorim,
Inhibitoren der Melanin Biosynthese
   Capropamid, Diclocymet, Fenoxanil, Phtalid, Pyroquilon, Tricyclazol
Resistenzinduktion
   Acibenzolar-S-methyl, Probenazol, Tiadinil
Weitere Fungizide
   Amibromdol, Benthiazol, Bethoxazin, Capsimycin, Carvon, Chloropicrin, Cufraneb, Cymoxanil, Dazomet, Debacarb, Diclomezine, Ferimzon, Flumetover, Fluopicolid, Fluoroimid, Fosetyl-Aluminium, Fosetyl-Caclcium, Fosetyl-Natrium, Hexachlorobenzol, 8-Hydroxychinolinsulfat, Irumamycin, Methasulphocarb, Metrafenon, Methyl Isothiocyanat, Mildiomycin, Natamycin, Nickel dimethyldithiocarbamat, Octhilinon, Oxamocarb, Oxyfenthiin, Pentachlorphenol und Salze, 2-Phenylphenol und Salze, Piperalin, Propanosin-Natrium, Pyribencarb, Pyrrolnitrin, Tecloftalam, Tecnazen, Trichlamid, Valiphenal, Zarilamid,
   2-(2-{[6-(3-Chlor-2-methylphenoxy)-5-fluorpyrimidin-4-yl]oxy}phenyl)-2-(methoxyimino)-N-methylacetamid,
   2-[[[[1-[3(lFluor-2-phenylethyl)oxy] phenyl] ethyliden]amino)oxy]methyl]-alpha-(methoxyimino)-N-methyl-alphaE-benzacetamid,
   cis-1-(4-Chlorphenyl)-2-(1H-1,2,4-triazot-1-yl)-cycloheptanol,
   1-[(4-Methoxyphenoxy)methyl]-2,2-dimethylpropyl-1H-imidazol-1- carbonsäure,
   2,3,5,6-Tetrachlor-4-(methylsulfonyl)-pyridin,
   2-Butoxy-6-iod-3-propyl-benzopyranon-4-on,
   2-Chlor-N-(2,3-dihydro-1,1,3-trimethyl-1H-inden-4-yl)-3-pyridincarboxamid,
   3,4,5-Trichlor-2,6-pyridindicarbonitril,
   3,4-Dichlor-N-(2-cyanophenyl)isothiazol-5-carboxamid (Isotianil)
   3-[5-(4-Chlorphenyl)-2,3-dimethylisoxazolidin-3-yl]pyridin,
   5-Chlor-6-(2,4,6-trifluorophenyl)-N-[(1R)-1,2,2-trimethylpropyl][1,2,4]triazolo[1,5-a]pyrimidin-7-amin,
   5-Chlor-7-(4-methylpiperidin-1-yl)-6-(2,4,6-trifluorophenyl)[1,2,4]triazolo[1,5-a]pyrimidin,
   5-Chlor-N-[(1R)-1,2-dimethylpropyl]-6-(2,4,6-trifluorophenyl) [1,2,4]triazolo[1,5-a]pyrimidin-7-amin,
   Methyl 2-[[[cyclopropyl[(4-methoxyphenyl) imino]methyl]thio]methyl]-.alpha.-(methoxymethylen)- benzacetat,
   Methyl 1-(2,3-dihydro-2,2-dimethyl-1H-inden-1-yl)-1H-imidazole-5-carboxylat,
   N-(3',4'-dichlor-5-fluorbiphenyl-2-yl)-3-(difluormethyl)-1-methyl-1 H-pyrazol-4-carboxamid,
   N-(3-Ethyl-3,5,5-trimethyl-cyclohexyl)-3-formylamino-2-hydroxy-benzamid,
   N-(4-Chlor-2-nitrophenyl)-N-ethyl-4-methyl-benzenesulfonamid,
   N-(4-chlorbenzyl)-3-[3-methoxy-4-(prop-2-yn-1-yloxy)phenyl]propanamid,
   N-[(4-chlorphenyl)(cyano)methyl]-3-[3-methoxy-4-(prop-2-yn-1-yloxy)phenyl]propanamid,
   N-(5-Brom-3-chlorpyridin-2-yl)methyl-2,4-dichlornicotinamid,
   N-[1-(5-Brom-3-chloropyridin-2-yl)ethyl]-2,4-dichloronicotinamid,
   (2S)-N-[2-[4-[[3-(4-chlorophenyl)-2-propinyl]oxy]-3-methoxyphenyl]ethyl]- 3-methyl-2-[(methylsulfonyl)amino]-butanamid,
   N-{(Z)-[(cyclopropylmethoxy)imino][6-(difluormethoxy)-2,3-difluorphenyl]methyl}-2-benzacetamid,
   N-{2-[1,1'-bi(cyclopropyl)-2-yl]phenyl}-3-(difluormethyl)-1-methyl-1H-pyrazol-4-carboxamid,
   N-{2-[3-Chlor-5-(trifluormethyl)pyridin-2-yl]ethyl}-2-(trifluoromethyl)benzamid,
   N-ethyl-N-methyl-N'-{2-methyl-5-(trifluormethyl)-4-[3-(trimethylsilyl)propoxy]phenyl}imidoformamid,
   O-[1-[(4-Methoxyphenoxy)methyl]-2,2-dimethylpropyl]-1H-imidazol-1-carbothioic acid,
   2-Amino-4-methyl-N-phenyl-5-thiazolcarboxamid,
   2,4-Dihydro-5-methoxy-2-methyl-4-[[[[1-[3-(trifluoromethyl)-phenyl]-ethyliden]-amino]-oxy]-methyl]-phenyl]-3H-1,2,4-triazol-3-on (CAS Nr. 185336-79-2),
   N-(6-Methoxy-3-pyridinyl)-cyclopropan carboxamid.

Besonders bevorzugt sind außerdem folgende Insektizide:
Neonikotinoide der Formel (I) (siehe z.B. EP-A1-192 606, EP-A 2-580 533, EP-A 2-376 279, EP-A 2-235 725). 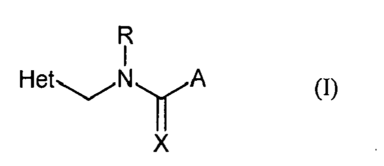 worin
   - Het: für einen Heterocyclus ausgewählt aus der folgenden Gruppe von Heterocyclen steht:
   2-Chlorpyrid-5-yl, 2-Methylpyrid-5-yl, 1-Oxido-3-pyridinio, 2-Chlor-1-oxido-5-pyridinio, 2,3-dichlor-1-oxido-5-pyridinio, Tetrahydrofuran-3-yl, 5-Methyltetrahydrofuran-3-yl, 2-Chlorthiazol-5-yl,
   - R: für Wasserstoff, C₁-C₆-Alkyl, C₂-C₆-Alkenyl, C₂-C₆-Alkinyl, -C(=O)-CH₃ oder Benzyl steht oder gemeinsam mit R² für eine der folgenden Gruppen steht: -CH₂-CH₂-, -CH₂-CH₂-CH₂-, -CH₂-O-CH₂-, -CH₂-S-CH₂-, -CH₂-NH-CH₂-, -CH₂-N(CH₃)-CH₂- und
   - X: für N-NO₂, N-CN oder CH-NO₂ steht,
   - A: für Methyl, -N(R¹)(R²) oder S(R²) steht, worin
   R¹ für Wasserstoff, C₁-C₆-Alkyl, Phenyl-C₁-C₄-Alkyl, C₃-C₆-Cycloalkyl, C₂-C₆-Alkenyl oder C₂-C₆-Alkinyl steht, und
   R² für C₁-C₆-Alkyl, C₂-C₆-Alkenyl, C₂-C₆-Alkinyl, -C(=O)-CH₃ oder Benzyl steht.

Im Einzelnen seien die folgenden Verbindungen (I-1) bis (I-7) aus der Klasse der Neonikotinoide genannt:
(I-1) Thiamethoxam
(I-2) Clothianidin
(I-3) Thiacloprid
(I-4) Dinotefuran
(I-5) Acetamiprid
(I-6) Nitenpyram
(I-7) Imidacloprid

Wirkstoffe aus der Klasse der Pyrethroide, beispielsweise die Substanzen (II-1) bis (II-24):
(II-1) Acrinathrin
(II-2) Alpha-cypermethrin
(II-3) Betacyfluthrin
(II-4) Gamma-Cyhalothrin
(II-5) Cypermethrin
(II-6) Deltamethrin
(II-7) Esfenvalerat
(II-8) Ethofenprox
(II-9) Fenpropathrin
(II-10) Fenvalerat
(II-11) Flucythrinat
(II-12) Lambda-cyhalothrin
(II-13) Permethrin
(II-14) Taufluvalinat
(II-15) Tralomethrin
(II-16) Zeta-cypermethrin
(II-17) Cyfluthrin
(II-18) Bifenthrin
(II-19) Cycloprothrin
(II-20) Eflusilanat
(II-21) Fubfenprox
(II-22) Pyrethrin
(II-23) Resmethrin
(II-24) Tefluthrin

Wirkstoffe aus der Klasse der Butenolide (bekannt aus EP-A 0 539 588) der Formel (III): 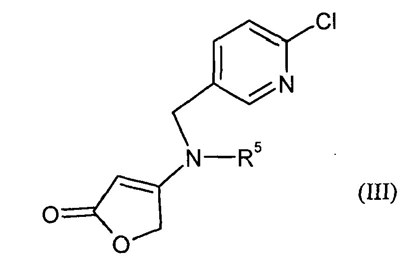 wobei
- R⁵: für Methyl oder Cyclopropyl steht.
Im Einzelnen seien die Verbindungen (III-1) und (III-2) genannt.

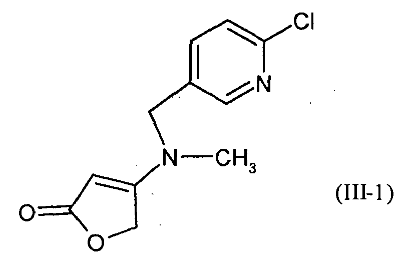

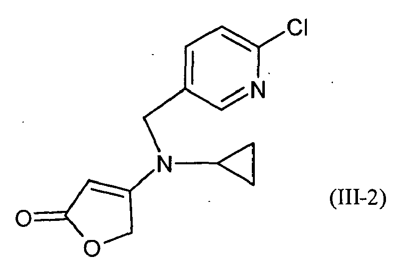

Wirkstoffe aus der Klasse der Ketoenole (bekannt aus EP-A 0 539 588) der Formel (IV): 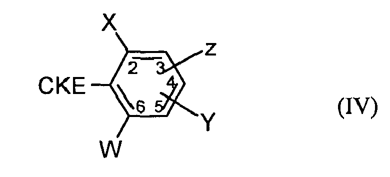 in welcher
- W: für Wasserstoff, Alkyl, Alkenyl, Alkinyl, Halogen, Alkoxy, Halogenalkyl, Halogenalkoxy oder Cyano steht,
- X: für Halogen, Alkyl, Alkenyl, Alkinyl, Alkoxy, Alkoxy-alkoxy, Halogenalkyl, Halogenalkoxy oder Cyano steht,
- Y: für Wasserstoff, Halogen, Alkyl, Alkenyl, Alkinyl, Alkoxy, Cyano, Halogenalkyl, Halogenalkoxy oder für jeweils gegebenenfalls substituiertes Phenyl oder Hetaryl steht,
- Z: für Wasserstoff, Halogen, Alkyl, Halogenalkyl, Cyano, Alkoxy oder Halogenalkoxy steht,
CKE für eine der Gruppen 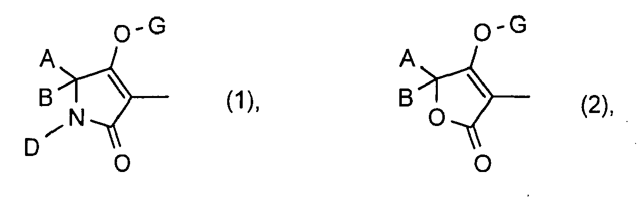 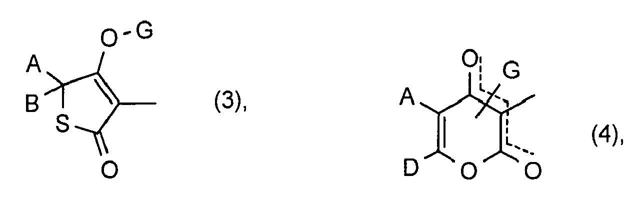 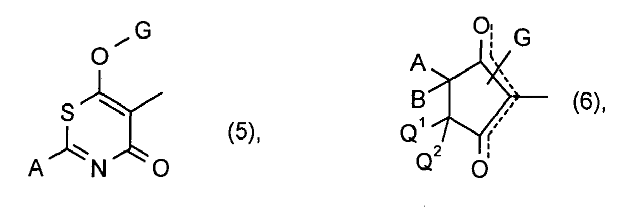 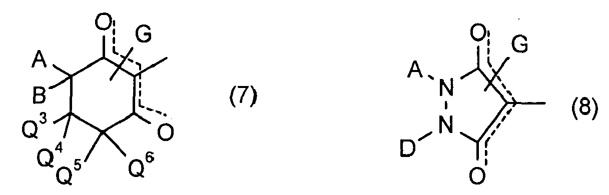 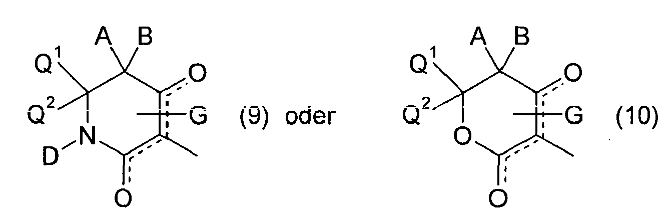 steht,
worin
- A: für Wasserstoff, jeweils gegebenenfalls durch Halogen substituiertes Alkyl, Alkenyl, Alkoxyalkyl, Alkylthioalkyl, gesättigtes oder ungesättigtes, gegebenenfalls substituiertes Cycloalkyl, in welchem gegebenenfalls mindestens ein Ringatom durch ein Heteroatom ersetzt ist, oder jeweils gegebenenfalls durch Halogen, Alkyl, Halogenalkyl, Alkoxy, Halogenalkoxy, Cyano oder Nitro substituiertes Aryl, Arylalkyl oder Hetaryl steht,
- B: für Wasserstoff, Alkyl oder Alkoxyalkyl steht, oder
- A und B: gemeinsam mit dem Kohlenstoffatom an das sie gebunden sind für einen gesättigten oder ungesättigten, gegebenenfalls mindestens ein Heteroatom enthaltenden unsubstituierten oder substituierten Cyclus stehen,
- D: für Wasserstoff oder einen gegebenenfalls substituierten Rest aus der Reihe Alkyl, Alkenyl, Alkinyl, Alkoxyalkyl, gesättigtes oder ungesättigtes Cycloalkyl, in welchem gegebenenfalls eines oder mehrere Ringglieder durch Heteroatome ersetzt sind, Arylalkyl, Aryl, Hetarylalkyl oder Hetaryl steht oder
- A und D: gemeinsam mit den Atomen an die sie gebunden sind für einen gesättigten oder ungesättigten und gegebenenfalls mindestens ein (im Falle CKE=8 ein weiteres) Heteroatom enthaltenden, im A,D-Teil unsubstituierten oder substituierten Cyclus stehen, bzw.
- A und Q¹: gemeinsam für gegebenenfalls durch Hydroxy, jeweils gegebenenfalls substituiertes Alkyl, Alkoxy, Alkylthio, Cycloalkyl, Benzyloxy oder Aryl substituiertes Alkandiyl oder Alkendiyl stehen oder
- D und Q¹: gemeinsam mit den Atomen, an die sie gebunden sind, für einen gesättigten oder ungesättigten und gegebenenfalls mindestens ein Heteroatom enthaltenden, im D, Q¹-Teil unsubstituierten oder substituierten Cyclus stehen,
- Q¹: für Wasserstoff, Alkyl, Alkoxyalkyl, gegebenenfalls substituiertes Cycloalkyl (worin gegebenenfalls eine Methylengruppe durch Sauerstoff oder Schwefel ersetzt ist) oder gegebenenfalls substituiertes Phenyl steht,
- Q², Q⁴, Q⁵ und Q⁶: unabhängig voneinander für Wasserstoff oder Alkyl stehen,
- Q³: für Wasserstoff, für gegebenenfalls substituiertes Alkyl, Alkoxyalkyl, Alkylthioalkyl, gegebenenfalls substituiertes Cycloalkyl (worin gegebenenfalls eine Methylengruppe durch Sauerstoff oder Schwefel ersetzt ist) oder gegebenenfalls substituiertes Phenyl steht, oder
- Q¹ und Q²: gemeinsam mit dem Kohlenstoffatom, an das sie gebunden sind, für einen gegebenenfalls ein Heteroatom enthaltenden unsubstituierten oder substituierten Cyclus stehen, oder
- Q³ und Q⁴: gemeinsam mit dem Kohlenstoffatom, an das sie gebunden sind, für einen gesättigten oder ungesättigten, gegebenenfalls ein Heteroatom enthaltenden unsubstituierten oder substituierten Cyclus stehen,
- G: für Wasserstoff (a) oder für eine der Gruppen 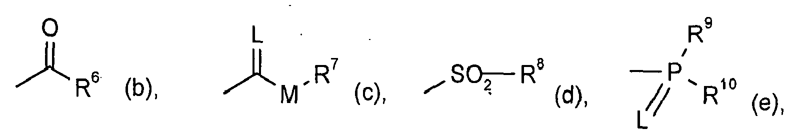 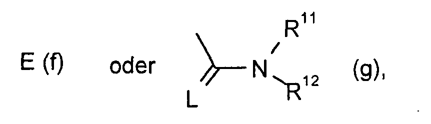 steht,
worin
E für ein Metallionäquivalent oder ein Ammoniumion steht,
L für Sauerstoff oder Schwefel steht,
M für Sauerstoff oder Schwefel steht,
R⁶ für jeweils gegebenenfalls durch Halogen substituiertes Alkyl, Alkenyl, Alkoxyalkyl, Alkylthioalkyl, Polyalkoxyalkyl oder gegebenenfalls durch Halogen, Alkyl oder Alkoxy substituiertes Cycloalkyl, das durch mindestens ein Heteroatom unterbrochen sein kann, jeweils gegebenenfalls substituiertes Phenyl, Phenylalkyl, Hetaryl, Phenoxyalkyl oder Hetaryloxyalkyl steht,
R⁷ für jeweils gegebenenfalls durch Halogen substituiertes Alkyl, Alkenyl, Alkoxyalkyl, Polyalkoxyalkyl oder für jeweils gegebenenfalls substituiertes Cycloalkyl, Phenyl oder Benzyl steht,
R⁸, R⁹ und R¹⁰ unabhängig voneinander für jeweils gegebenenfalls durch Halogen substituiertes Alkyl, Alkoxy, Alkylamino, Dialkylamino, Alkylthio, Alkenylthio, Cycloalkylthio oder für jeweils gegebenenfalls substituiertes Phenyl, Benzyl, Phenoxy oder Phenylthio stehen,
R¹¹ und R¹² unabhängig voneinander für Wasserstoff, jeweils gegebenenfalls durch Halogen substituiertes Alkyl, Cycloalkyl, Alkenyl, Alkoxy, Alkoxyalkyl, für gegebenenfalls substituiertes Phenyl, für gegebenenfalls substituiertes Benzyl stehen, oder gemeinsam mit dem N-Atom, an das sie gebunden sind, für einen gegebenenfalls durch Sauerstoff oder Schwefel unterbrochenen Cyclus stehen.

Im einzelnen seien die Verbindungen (IV-1) bis (IV-5) genannt:

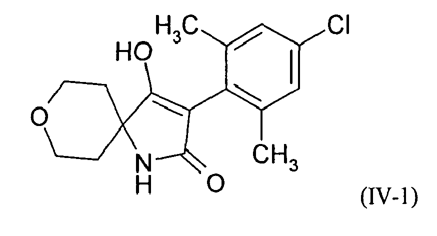

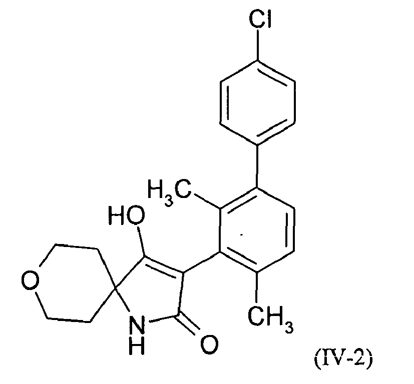

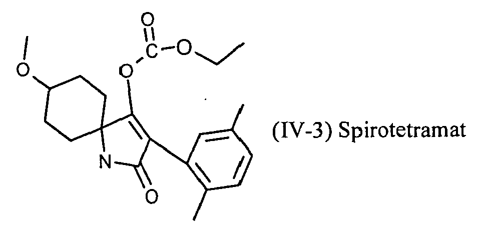

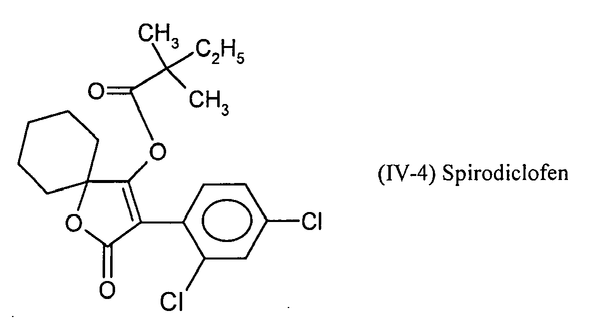

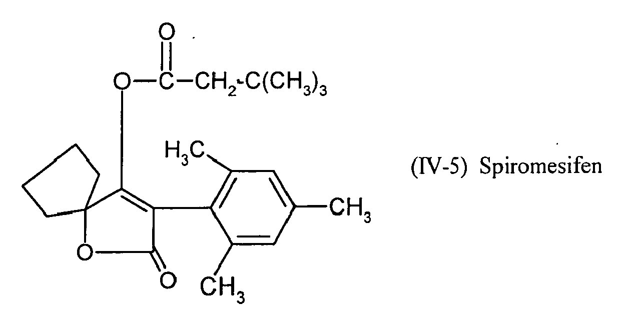

Wirkstoffe aus der Klasse der Fiprole:

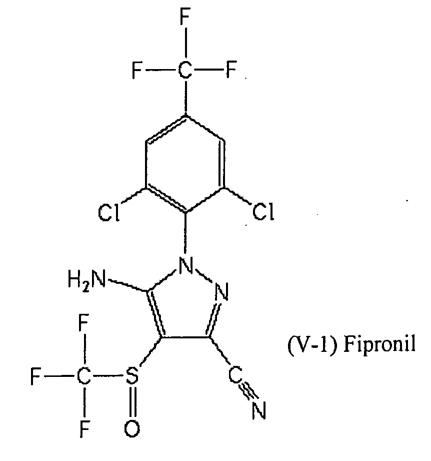

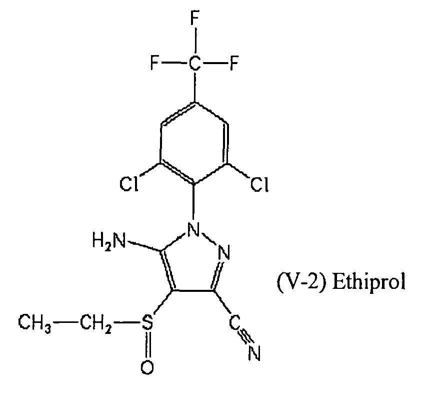

Wirkstoffe aus der Klasse der Mectine:
(VI-1) Abamectin
(VI-2) Emamectin
(VI-3) Emamectin-benzoat
(VII4) Ivermectin
(VI-5) Lepimectin
(VI-6) Milbemycin.

Wirkstoffe aus der Klasse der Anthranilamide:

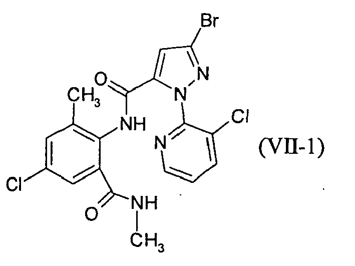

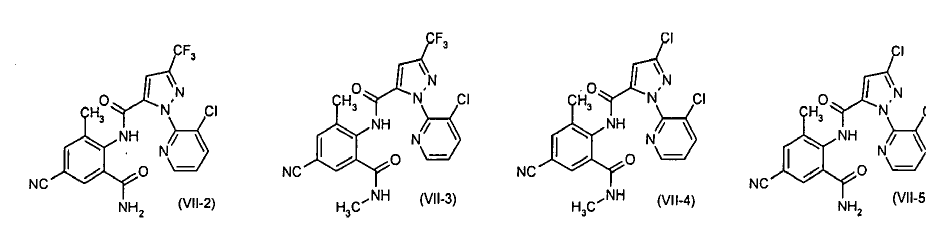

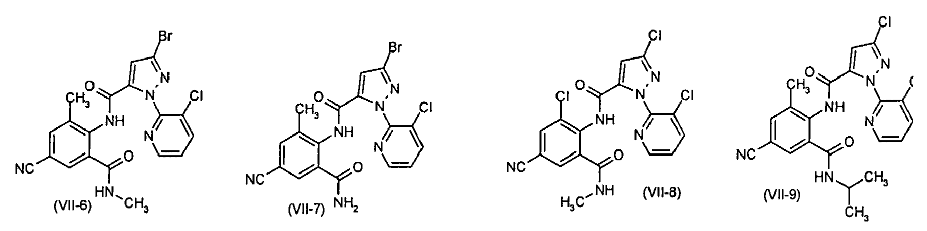

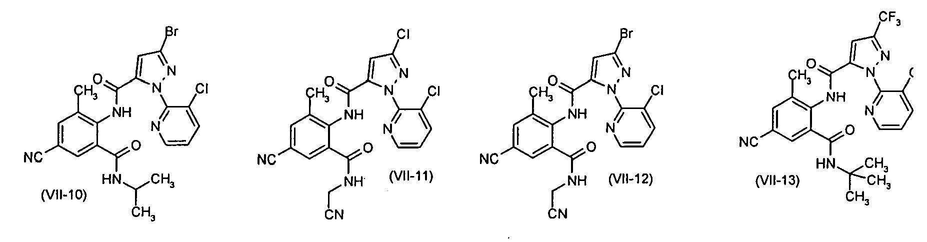

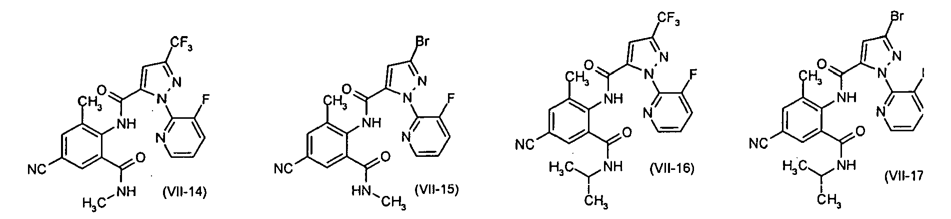

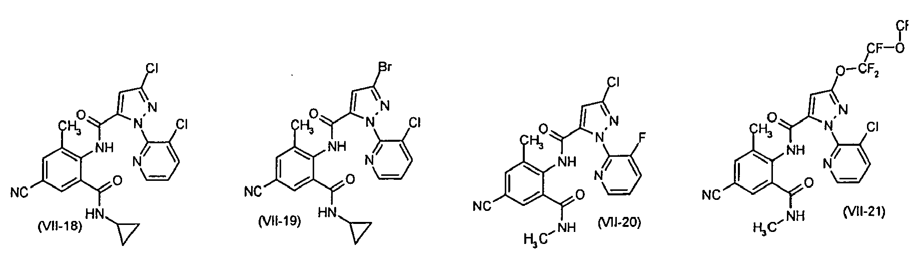

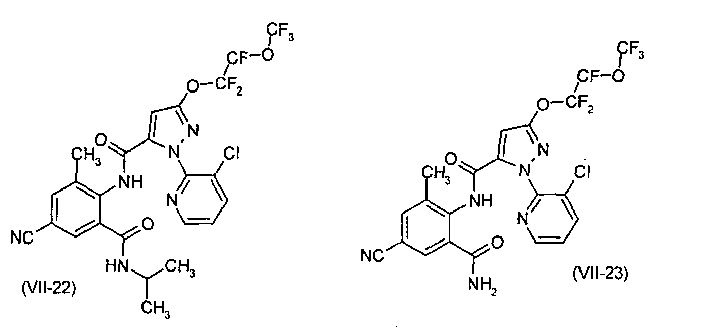

Wirkstoffe aus der Klasse der Spinosyne, zum Beispiel
(VIII-1) Spinosad

Wirkstoffe aus der Klasse der Organophosphate, z.B.
Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon und Vamidothion, bevorzugt
(IX-1) Chlorpyrifos (-methyl/-ethyl),
(IX-2) Cadusafos,
(IX-3) Acephate,
(IX-4) Fenamiphos
(IX-5) Fosthiazate und
(IX-6) Ethoprofos.

Wirkstoffe aus der Klasse der Carbamate,
zum Beispiel Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Trimethacarb, XMC, Xylylcarb und Triazamate, bevorzugt
(X-1) Carbofuran,
(X-2) Aldicarb und
(X-3) Oxamyl.

Als Penetrationsförderer kommen im vorliegenden Zusammenhang alle diejenigen wasserlöslichen / -mischbaren Substanzen in Betracht, die üblicherweise eingesetzt werden, um das Eindringen von agrochemischen Wirkstoffen in Pflanzen zu verbessern.

Bevorzugte Penetrationsförderer sind Alkanolalkoxylate der Formel (XI)

R³-O-(-AO)ₘR⁴ (XI)

in welcher
- R³: für geradkettiges oder verzweigtes Alkyl mit 4 bis 20 Kohlenstoffatomen steht,
- R⁴: für H, Methyl, Ethyl, n-Propyl, i-Propyl, n-Butyl, i-Butyl, t-Butyl, n-Pentyl oder n-Hexyl steht,
- AO: für einen Ethylenoxid-Rest, einen Propylenoxid-Rest, einen Butylenoxid-Rest oder für Gemische aus Ethylenoxid- und Propylenoxid-Resten oder Butylenoxid-Resten steht und
- m: für Zahlen von 2 bis 30 steht.

Eine besonders bevorzugte Gruppe von Penetrationsförderern sind Alkanolalkoxylate der Formel (XI-1)

R³-O-(-EO-)ₙ- R⁴ (XI-1)

in welcher
- R³: die oben angegebene Bedeutung hat,
- R⁴: die oben angegebene Bedeutung hat,
- EO: für -CH₂-CH₂-O- steht und
- n: für Zahlen von 2 bis 20 steht.

In den zuvor angegebenen Formeln steht
- R³: vorzugsweise für Butyl, i-Butyl, n-Pentyl, i-Pentyl, Neoperityl, n-Hexyl, i-Hexyl, n-Octyl, i-Octyl, 2-Ethyl-hexyl, Nonyl, i-Nonyl, Decyl, n-Dodecyl; i-Dodecyl, Lauryl, Myristyl, i-Tridecyl, Trimethyl-nonyl, Palmityl, Stearyl oder Eicosyl.

Eine ganz besonders bevorzugte Gruppe von Penetrationsförderern sind Alkanol-Alkoxylate der Formel

CH₃-(CH₂)ₜ-CH₂-O-(-CH₂-CH₂-O-)ᵤ-R⁴ (XI-1-1)

in welcher
- R⁴: die oben angegebene Bedeutung hat,
- t: für Zahlen von 6 bis 13 steht
- u: für Zahlen von 4 bis 17 steht.

Insbesondere bevorzugt genannt seien Alkanol-Alkoxylate der Formel (XI-1-1-1)

CH₃-(CH₂)ₜ-CH₂-O-(-CH₂-CH₂-O-)ᵤ-R⁴ (XI-1-1-1)

in welcher
- R⁴: die oben angegebene Bedeutung hat,
- t: für den Durchschnittswert 10,5 steht und
- u: für den Durchschnittswert 8,4 steht.

Hervorgehoben genannt sei Alkanol-Alkoxylat der Formel (XI-1-1-1-1)

CH₃-(CH₂)ₜ-CH₂-O-(-CH₂-CH₂-O-)ᵤ-H (XI-1-1-1-1)

in welcher
- t: für den Durchschnittswert 10,5 steht und
- u: für den Durchschnittswert 8,4 steht.

Die Alkanol-Alkoxylate sind durch die obigen Formeln allgemein definiert. Bei diesen Substanzen handelt es sich um Gemische von Stoffen des angegebenen Typs mit unterschiedlichen Kettenlängen. Für die Indices errechnen sich deshalb Durchschnittswerte, die auch von ganzen Zahlen abweichen können.

Die Alkanol-Alkoxylate der angegebenen Formeln sind bekannt oder lassen sich nach bekannten Methoden herstellen (vgl. WO 98-35 553, WO 00-35 278 und EP-A 0 681 865).

Eine weitere Gruppe von bevorzugten Penetrationsförderern sind Polyalkoxytriglyzeride. Polyalkoxytriglyzeride können durch Alkoxylierung von Triglyzeriden hergestellt werden. Die Alkoxylierung von Triglyzeriden führt zu Stoffgemischen, wobei eine bis drei der Seitenketten alkoxyliert werden. Bei der Alkoxylierung kann man unterscheiden zwischen Ethoxylierung, Propoxylierung, Butoxylierung oder einer Mischung dieser Prozesse. Die Länge der unmodifizierten Seitenketten kann für jede der Seitenketten unabhängig von den anderen Seitenketten im selben Molekül variieren zwischen 9 und 24, bevorzugt zwischen 12 und 22, ganz bevorzugt zwischen 14 und 20 Kohlenstoffatomen. Diese aliphatischen Seiteketten können gerade oder verzweigt vorliegen.

In eine bevorzugten Ausführungsform der vorliegenden Erfindung werden die Polyalkoxytriglyzeride durch Ethoxylierung von Triglyzeriden erhalten.

In einer besonders bevorzugten Ausführungsform der vorliegenden Erfindung werden die Polyalkoxytriglyzeride durch Ethoxylierung von Rapsöl, Kornöl, Palmkernöl oder Mandelöl erhalten.

In eine ganz besonders bevorzugten Ausführungsform der vorliegenden Erfindung werden die Polyalkoxytriglyzeride durch Ethoxylierung von Rapsöl erhalten wobei der Ethoxylierungsgrad zwischen 60 und 80 Gew.-% liegt.

Entsprechende Polyalkoxytriglyzeride sind bekannt oder lassen sich nach bekannten Methoden herstellen (kommerziell erhältlich z.B. unter den Namen Crovol® A 70 UK, Crovol® CR 70 G, Crovol® M 70 und Crovol® PK 70 von der Firma Croda).

Als Adjuvans kommen im vorliegenden Zusammenhang Befeuchtungsmittel aus der Gruppe der Polyglyzerine und Polyglyzerinderivate im Betracht. Polyglyzerine und Polyglyzerinderivate sind beschrieben in DE-A 100 23 153. Ganz besonders bevorzugt sind die Polyglyzerine und Polyglyzerinderivate, welche unter dem Handelsnamen Synergen® GL vermarktet werden.

Als nicht-ionische Tenside kommen alle üblicherweise in agrochemischen Mitteln einsetzbaren Stoffe dieses Typs in Betracht. Vorzugsweise genannt seien Polyethylenoxid-polypropylenoxid-Blockcopolymere, Polyethylenglykolether von linearen Alkoholen, Umsetzungsprodukte von Fettsäuren mit Ethylenoxid und/oder Propylenoxid, ferner Polyvinylalkohol, Polyvinylpyrrolidon, Mischpolymerisate aus Polyvinylalkohol und Polyvinylpyrrolidon, Mischpolymerisate aus Polyvinylacetat und Polyvinylpyrrolidon sowie Copolymerisate aus (Meth)acrylsäure und (Meth)acrylsäureestern, weiterhin Alkylethoxylate und Alkylarylethoxylate, die gegebenenfalls phosphatiert und gegebenenfalls mit Basen neutralisiert sein können, polyoxyamine Derivate und Nonylphenolethoxylate.

Als anionische Tenside kommen alle üblicherweise in agrochemischen Mitteln einsetzbaren Substanzen dieses Typs in Frage. Bevorzugt sind Alkalimetall- und Erdalkalimetall-Salze von Alkylsulfonsäuren oder Alkylarylsulfonsäuren.

Eine weitere bevorzugte Gruppe von anionischen Tensiden bzw. Dispergierhilfsmitteln sind Salze von Polystyrolsulfonsäuren, Salze von Polyvinylsulfonsäuren, Salze von Naphthalinsulfonsäure-Formaldehyd-Kondensationsprodukten, Salze von Kondensationsprodukten aus Naphthalinsulfonsäure, Phenolsulfonsäure und Formaldehyd sowie Salze von Ligninsulfonsäure.

Als schaumhemmende Stoffe kommen alle üblicherweise für diesen Zweck in agrochemischen Mitteln einsetzbaren Substanzen in Betracht. Bevorzugt sind Silikonöle und Magnesiumstearat.

Als Antioxidantien kommen alle üblicherweise für diesen Zweck in agrochemischen Mitteln einsetzbaren Substanzen in Betracht. Bevorzugt ist Butylhydroxytoluol (2,6-di-t-butyl-4-methylphenol, BHT).

Als Farbstoffe kommen alle üblicherweise für diesen Zweck in agrochemischen Mitteln einsetzbaren Substanzen in Frage. Beispielhaft genannt seien Titandioxid, Farbruß, Zinkoxid und Blaupigmente sowie Permanentrot FGR.

Als Konservierungsmittel kommen alle üblicherweise für diesen Zweck in agrochemischen Mitteln dieses Typs einsetzbaren Substanzen in Frage. Als Beispiele genannt seien Preventol® (Fa. Bayer AG) und Proxel®.

Als Spreitmittel kommen alle üblicherweise für diesen Zweck in agro-chemischen Mitteln einsetzbaren Substanzen in Betracht. Bevorzugt sind Polyether- oder organo- modifizierte Polysiloxane.

Als Frostschutzmittel kommen alle üblicherweise in agrochemischen Mitteln einsetzbaren Substanzen dieses Typs in Frage. Bevorzugt sind Harnstoff, Glyzerin oder Propylenglykol.

Als Verdicker kommen alle üblicherweise in agrochemischen Mitteln einsetzbaren Substanzen dieses Typs in Frage. Bevorzugt sind Silicate (wie z.B. Attagel® 50 der Firma Engelhard) oder Xanthan gum (wie z.B. Kelzan® S der Firma Kelko).

Die erfindungsgemäßen Zusammensetzungen enthalten
- im Allgemeinen zwischen 1 und 60 Gew.-% von einem oder mehreren der erfindungsgemäß verwendbaren agrochemischen Wirkstoffe, bevorzugt 5 bis 50 Gew.-% und besonders bevorzugt 10 bis 30 Gew.-%
- im Allgemeinen zwischen 1 und 50 Gew.-% mindestens eines erfindungsgemäßen Penetrationsförderer, bevorzugt 2 bis 30 Gew.-% und besonders bevorzugt 5 bis 20 Gew.-%.
- im Allgemeinen zwischen 1 und 25 Gew.-% mindestens eines erfindungsgemäßen Adjuvans, bevorzugt 2 bis 15 Gew.-% und besonders bevorzugt 5 bis 10 Gew.-%.
- im Allgemeinen zwischen 1 und 20 Gew.-% mindestens eines nicht-ionischen und/oder mindestens eines anionischen Tensids, bevorzugt zwischen 2,5 und 10 Gew.-%,
- im Allgemeinen zwischen 0,1 und 25 Gew.-% an Zusatzstoffen aus den Gruppen der schaumhemmenden Mittel, der Konservierungsmittel, der Antioxidantien, der Spreitmittel, der Farbstoffe und/oder Verdicker, bevorzugt zwischen 0,1 und 20 Gew.-%.

Die Herstellung der erfindungsgemäßen Suspensionskonzentrate erfolgt in der Weise, dass man die Komponenten in den jeweils gewünschten Verhältnissen miteinander vermischt. Die Reihenfolge, in der die Bestandteile miteinander vermengt werden, ist beliebig. Zweckmäßigerweise setzt man die festen Komponenten in fein gemahlenem Zustand ein. Es ist aber auch möglich, die nach dem Vermengen der Bestandteile entstehende Suspension zunächst einer Grob- und dann einer Feinmahlung zu unterziehen, so dass die mittlere Teilchengröße unterhalb von 20 µm liegt. Bevorzugt sind Suspensionskonzentrate, in denen die festen Partikel eine mittlere Teilchengröße zwischen 1 und 10 µm aufweisen.

Die Temperaturen können bei der Durchführung des erfindungsgemäßen Verfahrens in einem bestimmten Bereich variiert werden. Man arbeitet im allgemeinen bei Temperaturen zwischen 10°C und 60°C, vorzugsweise zwischen 15°C und 40°C.

Zur Durchführung des erfindungsgemäßen Verfahrens kommen übliche Misch- und Mahlgeräte in Betracht, die zur Herstellung von agrochemischen Formulierungen eingesetzt werden.

Bei den erfindungsgemäßen Zusammensetzungen handelt es sich um Formulierungen, die auch nach längerer Lagerung bei erhöhten Temperaturen oder in der Kälte stabil bleiben, da kein Kristallwachstum beobachtet wird. Sie lassen sich durch Verdünnen mit Wasser in homogene Spritzflüssigkeiten überführen.

Die Aufwandmenge an den erfindungsgemäßen Zusammensetzungen kann innerhalb eines größeren Bereiches variiert werden. Sie richtet sich nach den jeweiligen agrochemischen Wirkstoffen und nach deren Gehalt in den Zusammensetzungen.

Die erfindungsgemäßen Zusammensetzungen enthaltend mindestens einen insektiziden Wirksotff eignen sich bei guter Pflanzenverträglichkeit, günstiger Warmblütertoxizität und guter Umweltverträglichkeit zum Schutz von Pflanzen und Pflanzenorganen, zur Steigerung der Ernteerträge, Verbesserung der Qualität des Erntegutes und zur Bekämpfung von tierischen Schädlingen, insbesondere Insekten, Spinnentieren, Helminthen, Nematoden und Mollusken, die in der Landwirtschaft, im Gartenbau, bei der Tierzucht, in Forsten, in Gärten und Freizeiteinrichtungen, im Vorrats- und Materialschutz sowie auf dem Hygienesektor vorkommen. Sie können vorzugsweise als Pflanzenschutzmittel eingesetzt werden. Sie sind gegen normal sensible und resistente Arten sowie gegen alle oder einzelne Entwicklungsstadien wirksam. Zu den oben erwähnten Schädlingen gehören:

Aus der Ordnung der Anoplura (Phthiraptera) z.B. Damalinia spp., Haematopinus spp., Linognathus spp., Pediculus spp., Trichodectes spp..

Aus der Klasse der Arachnida z.B. Acarus siro, Aceria sheldoni, Aculops spp., Aculus spp., Amblyomma spp., Argas spp., Boophilus spp., Brevipalpus spp., Bryobia praetiosa, Chorioptes spp., Dermanyssus gallinae, Eotetranychus spp., Epitrimerus pyri, Eutetranychus spp., Eriophyes spp., Hemitarsonemus spp., Hyalomma spp., Ixodes spp., Latrodectus mactans, Metatetranychus spp., Oligonychus spp., Ornithodoros spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Stenotarsonemus spp., Tarsonemus spp., Tetranychus spp., Vasates lycopersici.

Aus der Klasse der Bivalva z.B. Dreissena spp..

Aus der Ordnung der Chilopoda z.B. Geophilus spp., Scutigera spp..

Aus der Ordnung der Coleoptera z.B. Acanthoscelides obtectus, Adoretus spp., Agelastica alni, Agriotes spp., Amphimallon solstitialis, Anobium punctatum, Anoplophora spp., Anthonomus spp., Anthrenus spp., Apogonia spp., Atomaria spp., Attagenus spp., Bruchidius obtectus, Bruchus spp., Ceuthorhynchus spp., Cleonus mendicus, Conoderus spp., Cosmopolites spp., Costelytra zealandica, Curculio spp., Cryptorhynchus lapathi, Dermestes spp., Diabrotica spp., Epilachna spp., Faustinus cubae, Gibbium psylloides, Heteronychus arator, Hylamorpha elegans, Hylotrupes bajulus, Hypera postica, Hypothenemus spp., Lachnosterna consanguinea, Leptinotarsa decemlineata, Lissorhoptrus oryzophilus, Lixus spp., Lyctus spp., Meligethes aeneus, Melolontha melolontha, Migdolus spp., Monochamus spp., Naupactus xanthographus, Niptus hololeucus, Oryctes rhinoceros, Oryzaephilus surinamensis, Otiorrhynchus sulcatus, Oxycetonia jucunda, Phaedon cochleariae, Phyllophaga spp., Popillia japonica, Premnotrypes spp., Psylliodes chrysocephala, Ptinus spp., Rhizobius ventralis, Rhizopertha dominica, Sitophilus spp., Sphenophorus spp., Sternechus spp., Symphyletes spp., Tenebrio molitor, Tribolium spp., Trogoderma spp., Tychius spp., Xylotrechus spp., Zabrus spp..

Aus der Ordnung der Collembola z.B. Onychiurus armatus.

Aus der Ordnung der Dermaptera z.B. Forficula auricularia.

Aus der Ordnung der Diplopoda z.B. Blaniulus guttulatus.

Aus der Ordnung der Diptera z.B. Aedes spp., Anopheles spp., Bibio hortulanus, Calliphora erythrocephala, Ceratitis capitata, Chrysomyia spp., Cochliomyia spp., Cordylobia anthropophaga, Culex spp., Cuterebra spp., Dacus oleae, Dermatobia hominis, Drosophila spp., Fannia spp., Gastrophilus spp., Hylemyia spp., Hyppobosca spp., Hypoderma spp., Liriomyza spp.. Lucilia spp., Musca spp., Nezara spp., Oestrus spp., Oscinella frit, Pegomyia hyoscyami, Phorbia spp., Stomoxys spp., Tabanus spp., Tannia spp., Tipula paludosa, Wohlfahrtia spp.

Aus der Klasse der Gastropoda z.B. Arion spp., Biomphalaria spp., Bulinus spp., Deroceras spp., Galba spp., Lymnaea spp., Oncomelania spp., Succinea spp..

Aus der Klasse der Helminthen z.B. Ancylostoma duodenale, Ancylostoma ceylanicum, Acylostoma braziliensis, Ancylostoma spp., Ascaris lubricoides, Ascaris spp., Brugia malayi, Brugia timori, Bunostomum spp., Chabertia spp., Clonorchis spp., Cooperia spp., Dicrocoelium spp, Dictyocaulus filaria, Diphyllobothrium latum, Dracunculus medinensis, Echinococcus granulosus, Echinococcus multilocularis, Enterobius vermicularis, Faciola spp., Haemonchus spp., Heterakis spp., Hymenolepis nana, Hyostrongulus spp., Loa Loa, Nematodirus spp., Oesophagostomum spp., Opisthorchis spp., Onchocerca volvulus, Ostertagia spp., Paragonimus spp., Schistosomen spp, Strongyloides fuelleborni, Strongyloides stercoralis, Stronyloides spp., Taenia saginata, Taenia solium, Trichinella spiralis, Trichinella nativa, Trichinella britovi, Trichinella nelsoni, Trichinella pseudopsiralis, Trichostrorigulus spp., Trichuris trichuria, Wuchereria bancrofti.

Weiterhin lassen sich Protozoen, wie Eimeria, bekämpfen.

Aus der Ordnung der Heteroptera z.B. Anasa tristis, Antestiopsis spp., Blissus spp., Calocoris spp., Campylomma livida, Cavelerius spp., Cimex spp., Creontiades dilutus, Dasynus piperis, Dichelops furcatus, Diconocoris hewetti, Dysdercus spp., Euschistus spp., Eurygaster spp., Heliopeltis spp., Horcias nobilellus, Leptocorisa spp., Leptoglossus phyllopus, Lygus spp., Macropes excavatus, Miridae, Nezara spp., Oebalus spp., Pentomidae, Piesma quadrata, Piezodorus spp., Psallus seriatus, Pseudacysta persea, Rhodnius spp., Sahlbergella singularis, Scotinophora spp., Stephanitis nashi, Tibraca spp., Triatoma spp.

Aus der Ordnung der Homoptera z.B. Acyrthosipon spp., Aeneolamia spp., Agonoscena spp., Aleurodes spp., Aleurolobus barodensis, Aleurothrixus spp., Amrasca spp., Anuraphis cardui, Aonidiella spp., Aphanostigma piri, Aphis spp., Arboridia apicalis, Aspidiella spp., Aspidiotus spp., Atanus spp., Aulacorthum solani, Bemisia spp., Brachycaudus helichrysii, Brachycolus spp., Brevicoryne brassicae, Calligypona marginata, Cameocephala fulgida, Ceratovacuna lanigera, Cercopidae, Ceroplastes spp., Chaetosiphon fragaefolii, Chionaspis tegalensis, Chlorita onukii, Chromaphis juglandicola, Chrysomphalus ficus, Cicadulina mbila, Coccomytilus halli, Coccus spp., Cryptomyzus ribis, Dalbulus spp., Dialeurodes spp., Diaphorina spp., Diaspis spp., Doralis spp., Drosicha spp., Dysaphis spp., Dysmicoccus spp., Empoasca spp., Eriosoma spp., Erythroneura spp., Euscelis bilobatus, Geococcus coffeae, Homalodisca coagulata, Hyalopterus arundinis, Icerya spp., Idiocerus spp., Idioscopus spp., Laodelphax striatellus, Lecanium spp., Lepidosaphes spp., Lipaphis erysimi, Macrosiphum spp., Mahanarva fimbriolata, Melanaphis sacchari, Metcalfiella spp., Metopolophium dirhodum, Monellia costalis, Monelliopsis pecanis, Myzus spp., Nasonovia ribisnigri, Nephotettix spp., Nilaparvata lugens, Oncometopia spp., Orthezia praelonga, Parabemisia myricae, Paratrioza spp., Parlatoria spp., Pemphigus spp., Peregrinus maidis, Phenacoccus spp., Phloeomyzus passerinii, Phorodon humuli, Phylloxera spp., Pinnaspis aspidistrae, Planococcus spp., Protopulvinaria pyriformis, Pseudaulacaspis pentagona, Pseudococcus spp., Psylla spp., Pteromalus spp., Pyrilla spp., Quadraspidiotus spp., Quesada gigas, Rastrococcus spp., Rhopalosiphum spp., Saissetia spp., Scaphoides titanus, Schizaphis graminum, Selenaspidus articulatus, Sogata spp., Sogatella furcifera, Sogatodes spp., Stictocephala festina, Tenalaphara malayensis, Tinocallis caryaefoliae, Tomaspis spp., Toxoptera spp., Trialeurodes vaporariorum, Trioza spp., Typhlocyba spp., Unaspis spp., Viteus vitifolii.

Aus der Ordnung der Hymenoptera z.B. Diprion spp., Hoplocampa spp., Lasius spp., Monomorium pharaonis, Vespa spp..

Aus der Ordnung der Isopoda z.B. Armadillidium vulgare, Oniscus asellus, Porcellio scaber.

Aus der Ordnung der Isoptera z.B. Reticulitermes spp., Odontotermes spp..

Aus der Ordnung der Lepidoptera z.B. Acronicta major, Aedia leucomelas, Agrotis spp., Alabama argillacea, Anticarsia spp., Barathra brassicae, Bucculatrix thurberiella, Bupalus piniarius, Cacoecia podana, Capua reticulana, Carpocapsa pomonella, Cheimatobia brumata, Chilo spp., Choristoneura fumiferana, Clysia ambiguella, Cnaphalocerus spp., Earias insulana, Ephestia kuehniella, Euproctis chrysorrhoea, Euxoa spp., Feltia spp., Galleria mellonella, Helicoverpa spp., Heliothis spp., Hofmannophila pseudospretella, Homona magnanima, Hyponomeuta padella, Laphygma spp., Lithocolletis blancardella, Lithophane antennata, Loxagrotis albicosta, Lymantria spp., Malacosoma neustria, Mamestra brassicae, Mocis repanda, Mythimna separata, Oria spp., Oulema oryzae, Panolis flammea, Pectinophora gossypiella, Phyllocnistis citrella, Pieris spp., Plutella xylostella, Prodenia spp., Pseudaletia spp., Pseudoplusia includens, Pyrausta nubilalis, Spodoptera spp., Thermesia gemmatalis, Tinea pellionella, Tineola bisselliella, Tortrix viridana, Trichoplusia spp..

Aus der Ordnung der Orthoptera z.B. Acheta domesticus, Blatta orientalis, Blattella germanica, Gryllotalpa spp., Leucophaea maderae, Locusta spp., Melanoplus spp., Periplaneta americana, Schistocerca gregaria.

Aus der Ordnung der Siphonaptera z.B. Ceratophyllus spp., Xenopsylla cheopis.

Aus der Ordnung der Symphyla z.B. Scutigerella immaculata.

Aus der Ordnung der Thysanoptera z.B. Baliothrips biformis, Enneothrips flavens, Frankliniella spp., Heliothrips spp., Hercinothrips femoralis, Kakothrips spp., Rhipiphorothrips cruentatus, Scirtothrips spp., Taeniothrips cardamoni, Thrips spp..

Aus der Ordnung der Thysanura z.B. Lepisma saccharina.

Zu den pflanzenparasitären Nematoden gehören z.B. Anguina spp., Aphelenchoides spp., Belonoaimus spp., Bursaphelenchus spp., Ditylenchus dipsaci, Globodera spp., Heliocotylenchus spp., Heterodera spp., Longidorus spp., Meloidogyne spp., Pratylenchus spp., Radopholus similis, Rotylenchus spp., Trichodorus spp., Tylenchorhynchus spp., Tylenchulus spp., Tylenchulus semipenetrans, Xiphinema spp..

Die erfindungsgemäßen Zusammensetzungen können gegebenenfalls in bestimmten Konzentrationen bzw. Aufwandmengen auch als Herbizide, Safener, Wachstumsregulatoren oder Mittel zur Verbesserung der Pflanzeneigenschaften, oder als Mikrobizide, beispielsweise als Fungizide, Antimykotika, Bakterizide, Virizide (einschließlich Mittel gegen Viroide) oder als Mittel gegen MLO (Mycoplasma-like-organism) und RLO (Rickettsia-like-organism) verwendet werden.

Die erfindungsgemäßen Zusammensetzungen können neben den bereits zuvor genannten agrochemischen Wirkstoffen als Mischungspartner weitere Wirkstoffe wie Insektizide, Lockstoffe, Sterilantie, Bakterizide, Akarizide, Nematizide, Fungizide, wachstumsregulierende Stoffe, Herbizide, Safener, Düngemittel oder Semiochemicals enthalten.

Besonders günstige Mischungspartner sind z.B. die folgenden:

### Fungizide:

Inhibitoren der Mitose und Zellteilung
   Ethaboxam, Pencycuron, Zoxamid
Inhibitoren der Atmungskette Komplex I
   Diflumetorim
Inhibitoren der Atmungskette Komplex II
   Penthiopyrad, Thifluzamid
Entkoppler
   Dinocap, Fluazinam
Inhibitoren der ATP Produktion
   Silthiofam
Inhibitoren der Aminosäure- und Proteinbiosynthese
   Blasticidin-S, Mepanipyrim
Inhibitoren der Signal-Transduktion
   Fenpiclonil,
Inhibitoren der Fett- und Membran Synthese
   Tolclofos-methyl
Inhibitoren der Ergosterol Biosynthese
   Fenhexamid,
Inhibitoren der Zellwand Synthese
   Validamycin A
Multisite
   Captafol, Captan, Chlorothalonil, Kupfersalze wie: Kupferhydroxid, Kupfernaphthenat, Kupferoxychlorid, Kupfersulfat, Kupferoxid, Oxin-Kupfer und Bordeaux Mischung, Dichlofluanid, Dithianon, Dodin, Dodin freie Base, Ferbam, Folpet, Fluorofolpet, Guazatin, Guazatinacetat, Iminoctadin, Iminoctadinalbesilat, Iminoctadintriacetat, Mankupfer, Mancozeb, Maneb, Metiram, Metiram Zink, Propineb, Schwefel und Schwefelpräparate enthaltend Calciumpolysulphid, Thiram, Tolylfluanid, Zineb, Ziram
Weitere Fungizide
   Chinomethionat, Chloropicrin, Cyflufenamid, Dichlorophen, Dicloran, Diphenylamin, Nitrothal-isopropyl, Proquinazid, Quintozen, Triazoxid,

### Bakterizide:

Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

### Insektizide / Akarizide / Nematizide:

Natrium-Kanal-Modulatoren / Spannungsabhängige Natrium-Kanal-Blocker
   Pyrethroide,
      zum Beispiel Allethrin (d-cis-trans, d-trans), Bioallethrin, Bioallethrin-S-cyclopentylisomer, Bioethanomethrin, Biopermethrin, Bioresmethrin, Chlovaporthrin, Cis-Cypermethrin, Cis-Resmethrin, Cis-Permethrin, Clocythrin, Cyhalothrin, Cyphenothrin, Empenthrin (1R-isomer), Fenfluthrin, Fenpyrithrin, Flubrocythrinate, Flufenprox, Flumethrin, Fluvalinate, Imiprothrin, Kadethrin, Metofluthrin, Permethrin (cis-, trans-), Phenothrin (1R-trans isomer), Prallethrin, Profluthrin, Protrifenbute, Pyresmethrin, RU 15525, Silafluofen, Terallethrin, Tetramethrin (-1R- isomer), Transfluthrin, ZXI 8901,
   DDT
   Oxadiazine,
      zum Beispiel Indoxacarb
   Semicarbazon,
      zum Beispiel Metaflumizon (BAS3201)
Acetylcholin-Rezeptor-Agonisten/-Antagonisten
   Chloronicotinyle,
      zum Beispiel Nithiazine
   Nicotine, Bensultap, Cartap
Acetylcholin-Rezeptor-Modulatoren
   Spinosyne,
      zum Beispiel Spinosad, Spinetoram
GABA-gesteuerte Chlorid-Kanal-Antagonisten
   Organochlorine,
      zum Beispiel Camphechlor, Chlordane, Endosulfan, Gamma-HCH, HCH, Heptachlor, Lindane, Methoxychlor
   Fiprole,
      zum Beispiel Acetoprole, Ethiprole, Fipronil, Pyrafluprole, Pyriprole, Vaniliprole
Juvenilhormon-Mimetika,
   zum Beispiel Diofenolan, Epofenonane, Fenoxycarb, Hydroprene, Kinoprene, Methoprene, Pyriproxifen, Triprene
Ecdysonagonisten/disruptoren
   Diacylhydrazine,
      zum Beispiel Chromafenozide, Halofenozide, Methoxyfenozide, Tebufenozide
Inhibitoren der Chitinbiosynthese
   Benzoylharnstoffe,
      zum Beispiel Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron
   Buprofezin
   Cyromazine
Inhibitoren der oxidativen Phosphorylierung, ATP-Disruptoren
   Diafenthiuron
   Organozinnverbindungen,
      zum Beispiel Azocyclotin, Cyhexatin, Fenbutatin-oxide
Entkoppler der oxidativen Phosphorylierung durch Unterbrechung des H-Protongradienten
   Pyrrole,
      zum Beispiel Chlorfenapyr
   Dinitrophenole,
      zum Beispiel Binapacyrl, Dinobuton, Dinocap, DNOC, Meptyldinocap
Site-I-Elektronentransportinhibitoren
   METI's,
      zum Beispiel Fenazaquin, Fenpyroximate, Pyrimidifen, Pyridaben, Tebufenpyrad, Tolfenpyrad
   Hydramethylnon
   Dicofol
Site-II-Elektronentransportinhibitoren
   Rotenone
Site-III-Elektronentransportinhibitoren
   Acequinocyl, Fluacrypyrim
Mikrobielle Disruptoren der Insektendarmmembran
   Bacillus thuringiensis-Stämme
Inhibitoren der Fettsynthese
   Tetramsäuren,
      zum Beispiel cis-3-(2,5-dimethylphenyl)-4-hydroxy-8-methoxy-1-azaspiro[4,5]dec-3-en-2-on
   Carboxamide,
      zum Beispiel Flonicamid
   Oktopaminerge Agonisten,
      zum Beispiel Amitraz
Inhibitoren der Magnesium-stimulierten ATPase,
   Propargite
   Nereistoxin-Analoge,
      zum Beispiel Thiocyclam hydrogen oxalate, Thiosultap-sodium
Agonisten des Ryanodin-Rezeptors,
   Benzoesäuredicarboxamide,
      zum Beispiel Flubendiamid
Biologika, Hormone oder Pheromone
Azadirachtin, Bacillus spec., Beauveria spec., Codlemone, Metarrhizium spec., Paecilomyces spec., Thuringiensin, Verticillium spec.
Wirkstoffe mit unbekannten oder nicht spezifischen Wirkmechanismen
   Begasungsmittel,
      zum Beispiel Aluminium phosphide, Methyl bromide, Sulfuryl fluoride
   Fraßhemmer,
      zum Beispiel Cryolite, Flonicamid, Pymetrozine
   Milbenwachstumsinhibitoren,
      zum Beispiel Clofentezine, Etoxazole, Hexythiazox
   Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyridalyl, Sulfluramid, Tetradifon, Tetrasul, Tri-arathene,Verbutin

Auch eine Mischung mit anderen bekannten Wirkstoffen, wie Herbiziden, Düngemitteln, Wachstumsregulatoren, Safenern, Semiochemicals, oder auch mit Mitteln zur Verbesserung der Pflanzeneigenschaften ist möglich.

Die erfindungsgemäßen Zusammensetzungen können ferner beim Einsatz als Insektizide in ihren handelsüblichen Formulierungen sowie in den aus diesen Formulierungen bereiteten Anwendungsformen in Mischung mit Synergisten vorliegen. Synergisten sind Verbindungen, durch die die Wirkung der in den erfindungsgemäßen Zusammensetzungen enthaltenen Wirkstoffe gesteigert wird, ohne daß der zugesetzte Synergist selbst aktiv wirksam sein muß.

Die erfindungsgemäßen Zusammensetzungen können ferner beim Einsatz als Insektizide in ihren handelsüblichen Formulierungen sowie in den aus diesen Formulierungen bereiteten Anwendungsformen in Mischungen mit Hemmstoffen vorliegen, die einen Abbau des enthaltenen agrochemischen Wirkstoffes nach Anwendung in der Umgebung der Pflanze, auf der Oberfläche von Pflanzenteilen oder in pflanzlichen Geweben vermindern.

Der Wirkstoffgehalt der aus den handelsüblichen Formulierungen bereiteten Anwendungsformen kann in weiten Bereichen variieren. Die Wirkstoffkonzentration der Anwendungsformen kann von 0,00000001 bis zu 95 Gew.-% Wirkstoff, vorzugsweise zwischen 0,00001 und 1 Gew.-% liegen.

Die Anwendung geschieht in einer den Anwendungsformen angepaßten üblichen Weise.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Sproß, Blatt, Blüte und Wurzel verstanden werden, wobei beispielhaft Blätter, Nadeln, Stengel, Stämme, Blüten, Fruchtkörper, Früchte und Saatgut sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Saatgut.

Die erfindungsgemäße Behandlung der Pflanzen und Pflanzenteile mit den Zusammensetzungen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen, Injizieren und bei Vermehrungsmaterial, insbesondere bei Saatgut, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) und deren Teile behandelt. Die Begriffe "Teile" bzw. "Teile von Pflanzen" oder "Pflanzenteile" wurden oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Zuckerrüben, Tomaten, Erbsen und andere Gemüsesorten, Baumwolle, Tabak, Raps, sowie Obstpflanzen (mit den Früchten Äpfel, Birnen, Zitrusfrüchten und Weintrauben) erwähnt, wobei Mais, Soja, Kartoffel, Baumwolle, Tabak und Raps besonders hervorgehoben werden. Als Eigenschaften ("Traits") werden besonders hervorgehoben die erhöhte Abwehr der Pflanzen gegen Insekten, Spinnentiere, Nematoden und Schnecken durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD®.(z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid-tolerante Pflanzen seien Maissorten, Baumwollsorten und Sojasorten genannt, die unter den Handelsbezeichnungen Roundup Ready® (Toleranz gegen Glyphosate z.B. Mais; Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid- resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfindungsgemäß mit den erfindungsgemäßen Zusammensetzungen behandelt werden. Die bei den Zusammensetzungen oben angegebenen Vorzugsbereiche gelten auch für die Behandlung dieser Pflanzen. Besonders hervorgehoben sei die Pflanzenbehandlung mit den im vorliegenden Text speziell aufgeführten Zusammensetzungen.

Die erfindungsgemäßen Zusammensetzungen wirken nicht nur gegen Pflanzen-, Hygiene- und Vorratsschädlinge, sondern auch auf dem veterinärmedizinischen Sektor gegen tierische Parasiten (Ekto- und Endoparasiten) wie Schildzecken, Lederzecken, Räudemilben, Laufmilben, Fliegen (stechend und leckend), parasitierende Fliegenlarven, Läuse, Haarlinge, Federlinge und Flöhe. Zu diesen Parasiten gehören:

Aus der Ordnung der Anoplurida z.B. Haematopinus spp., Linognathus spp., Pediculus spp., Phtirus spp., Solenopotes spp..

Aus der Ordnung der Mallophagida und den Unterordnungen Amblycerina sowie Ischnocerina z.B. Trimenopon spp., Menopon spp., Trinoton spp., Bovicola spp., Werneckiella spp., Lepikentron spp., Damalina spp., Trichodectes spp., Felicola spp..

Aus der Ordnung Diptera und den Unterordnungen Nematocerina sowie Brachycerina z.B. Aedes spp., Anopheles spp., Culex spp., Simulium spp., Eusimulium spp., Phlebotomus spp., Lutzomyia spp., Culicoides spp., Chrysops spp., Hybomitra spp., Atylotus spp., Tabanus spp., Haematopota spp., Philipomyia spp., Braula spp., Musca spp., Hydrotaea spp., Stomoxys spp., Haematobia spp., Morellia spp., Fannia spp., Glossina spp., Calliphora spp., Lucilia spp., Chrysomyia spp., Wohlfahrtia spp., Sarcophaga spp., Oestrus spp., Hypoderma spp., Gasterophilus spp., Hippobosca spp., Lipoptena spp., Melophagus spp..

Aus der Ordnung der Siphonapterida z.B. Pulex spp., Ctenocephalides spp., Xenopsylla spp., Ceratophyllus spp..

Aus der Ordnung der Heteropterida z.B. Cimex spp., Triatoma spp., Rhodnius spp., Panstrongylus spp..

Aus der Ordnung der Blattarida z.B. Blatta orientalis, Periplaneta americana, Blattela germanica, Supella spp..

Aus der Unterklasse der Acari (Acarina) und den Ordnungen der Meta- sowie Mesostigmata z.B. Argas spp., Ornithodorus spp., Otobius spp., Ixodes spp., Amblyomma spp., Boophilus spp., Dermacentor spp., Haemophysalis spp., Hyalomma spp., Rhipicephalus spp., Dermanyssus spp., Raillietia spp., Pneumonyssus spp., Sternostoma spp., Varroa spp..

Aus der Ordnung der Actinedida (Prostigmata) und Acaridida (Astigmata) z.B. Acarapis spp., Cheyletiella spp., Ornithocheyletia spp., Myobia spp., Psorergates spp., Demodex spp., Trombicula spp., Listrophorus spp., Acarus spp., Tyrophagus spp., Caloglyphus spp., Hypodectes spp., Pterolichus spp., Psoroptes spp., Chorioptes spp., Otodectes spp., Sarcoptes spp., Notoedres spp., Knemidocoptes spp., Cytodites spp., Laminosioptes spp..

Die erfindungsgemäßen Zusammensetzungen eignen sich auch zur Bekämpfung von Arthropoden, die landwirtschaftliche Nutztiere, wie z.B. Rinder, Schafe, Ziegen, Pferde, Schweine, Esel, Kamele, Büffel, Kaninchen, Hühner, Puten, Enten, Gänse, Bienen, sonstige Haustiere wie z.B. Hunde, Katzen, Stubenvögel, Aquarienfische sowie sogenannte Versuchstiere, wie z.B. Hamster, Meerschweinchen, Ratten und Mäuse befallen. Durch die Bekämpfung dieser Arthropoden sollen Todesfälle und Leistungsminderungen (bei Fleisch, Milch, Wolle, Häuten, Eiern, Honig usw.) vermindert werden, so daß durch den Einsatz der erfindungsgemäßen Zusammensetzungen eine wirtschaftlichere und einfachere Tierhaltung möglich ist.

Die Anwendung der erfindungsgemäßen Zusammensetzungen geschieht im Veterinärsektor und bei der Tierhaltung in bekannter Weise durch enterale Verabreichung in Form von beispielsweise Tabletten, Kapseln, Tränken, Drenchen, Granulaten, Pasten, Boli, des feed-through-Verfahrens, von Zäpfchen, durch parenterale Verabreichung, wie zum Beispiel durch Injektionen (intramuskulär, subcutan, intravenös, intraperitonal u.a.), Implantate, durch nasale Applikation, durch dermale Anwendung in Form beispielsweise des Tauchens oder Badens (Dippen), Sprühens (Spray), Aufgießens (Pour-on und Spot-on), des Waschens, des Einpuderns sowie mit Hilfe von wirkstoffhaltigen Formkörpern, wie Halsbändern, Ohrmarken, Schwanzmarken, Gliedmaßenbändern, Halftern, Markierungsvorrichtungen usw.

Bei der Anwendung für Vieh, Geflügel, Haustiere etc. kann man die Zusammensetzungen als Formulierungen (beispielsweise Pulver, Emulsionen, fließfähige Mittel), die die Wirkstoffe in einer Menge von 1 bis 80 Gew.-% enthalten, direkt oder nach 100 bis 10 000-facher Verdünnung anwenden oder sie als chemisches Bad verwenden.

Außerdem wurde gefunden, daß die erfindungsgemäßen Zusammensetzungen eine hohe insektizide Wirkung gegen Insekten zeigen, die technische Materialien zerstören.

Beispielhaft und vorzugsweise - ohne jedoch zu limitieren - seien die folgenden Insekten genannt:

Käfer wie Hylotrupes bajulus, Chlorophorus pilosis, Anobium punctatum, Xestobium rufovillosum, Ptilinus pecticornis, Dendrobium pertinex, Ernobius mollis, Priobium carpini, Lyctus brunneus, Lyctus africanus, Lyctus planicollis, Lyctus linearis, Lyctus pubescens, Trogoxylon aequale, Minthes rugicollis, Xyleborus spec. Tryptodendron spec. Apate monachus, Bostrychus capucins, Heterobostrychus brunneus, Sinoxylon spec. Dinoderus minutus;

Hautflügler wie Sirex juvencus, Urocerus gigas, Urocerus gigas taignus, Urocerus augur;

Termiten wie Kalotermes flavicollis, Cryptotermes brevis, Heterotermes indicola, Reticulitermes flavipes, Reticulitermes santonensis, Reticulitermes lucifugus, Mastotermes darwiniensis, Zootermopsis nevadensis, Coptotermes formosanus;

Borstenschwänze wie Lepisma saccharina.

Unter technischen Materialien sind im vorliegenden Zusammenhang nicht-lebende Materialien zu verstehen, wie vorzugsweise Kunststoffe, Klebstoffe, Leime, Papiere und Kartone, Leder, Holz, Holzverarbeitungsprodukte und Anstrichmittel.

Die anwendungsfertigen Mittel können gegebenenfalls noch weitere Insektizide und gegebenenfalls noch ein oder mehrere Fungizide enthalten.

Hinsichtlich möglicher zusätzlicher Zumischpartner sei auf die oben genannten Insektizide und Fungizide verwiesen.

Zugleich können die erfindungsgemäßen Zusammensetzungen zum Schutz vor Bewuchs von Gegenständen, insbesondere von Schiffskörpern, Sieben, Netzen, Bauwerken, Kaianlagen und Signalanlagen, welche mit See- oder Brackwasser in Verbindung kommen, eingesetzt werden.

Weiter können die erfindungsgemäßen Zusammensetzungen allein oder in Kombinationen mit anderen Wirkstoffen als Antifouling-Mittel eingesetzt werden.

Die Zusammensetzungen eignen sich auch zur Bekämpfung von tierischen Schädlingen im Haushalts-, Hygiene- und Vorratsschutz, insbesondere von Insekten, Spinnentieren und Milben, die in geschlossenen Räumen, wie beispielsweise Wohnungen, Fabrikhallen, Büros, Fahrzeugkabinen u.ä. vorkommen. Sie können zur Bekämpfung dieser Schädlinge allein oder in Kombination mit anderen Wirk- und Hilfsstoffen in Haushaltsinsektizid-Produkten verwendet werden. Sie sind gegen sensible und resistente Arten sowie gegen alle Entwicklungsstadien wirksam. Zu diesen Schädlingen gehören:

Aus der Ordnung der Scorpionidea z.B. Buthus occitanus.

Aus der Ordnung der Acarina z.B. Argas persicus, Argas reflexus, Bryobia ssp., Dermanyssus gallinae, Glyciphagus domesticus, Ornithodorus moubat, Rhipicenhalus sanguineus, Trombicula alfreddugesi, Neutrombicula autumnalis, Dermatophagoides pteronissimus, Dermatophagoides forinae.

Aus der Ordnung der Araneae z.B. Aviculariidae, Araneidae.

Aus der Ordnung der Opiliones z.B. Pseudoscorpiones chelifer, Pseudoscorpiones cheiridium, Opiliones phalangium.

Aus der Ordnung der Isopoda z.B. Oniscus asellus, Porcellio scaber.

Aus der Ordnung der Diplopoda z.B. Blaniulus guttulatus, Polydesmus spp..

Aus der Ordnung der Chilopoda z.B. Geophilus spp..

Aus der Ordnung der Zygentoma z.B. Ctenolepisma spp., Lepisma saccharina, Lepismodes inquilinus.

Aus der Ordnung der Blattaria z.B. Blatta orientalies, Blattella germanica, Blattella asahinai, Leucophaea maderae, Panchlora spp., Parcoblatta spp., Periplaneta australasiae, Periplaneta americana, Periplaneta brunnea, Periplaneta fuliginosa, Supella longipalpa.

Aus der Ordnung der Saltatoria z.B. Acheta domesticus.

Aus der Ordnung der Dermaptera z.B. Forficula auricularia.

Aus der Ordnung der Isoptera z.B. Kalotermes spp., Reticulitermes spp.

Aus der Ordnung der Psocoptera z.B. Lepinatus spp., Liposcelis spp.

Aus der Ordnung der Coleoptera z.B. Anthrenus spp., Attagenus spp., Dermestes spp., Latheticus oryzae, Necrobia spp., Ptinus spp., Rhizopertha dominica, Sitophilus granarius, Sitophilus oryzae, Sitophilus zeamais, Stegobium paniceum.

Aus der Ordnung der Diptera z.B. Aedes aegypti, Aedes albopictus, Aedes taeniorhynchus, Anopheles spp., Calliphora erythrocephala, Chrysozona pluvialis, Culex quinquefasciatus, Culex pipiens, Culex tarsalis, Drosophila spp., Fannia canicularis, Musca domestica, Phlebotomus spp., Sarcophaga carnaria, Simulium spp., Stomoxys calcitrans, Tipula paludosa.

Aus der Ordnung der Lepidoptera z.B. Achroia grisella, Galleria mellonella, Plodia interpunctella, Tinea cloacella, Tinea pellionella, Tineola bisselliella.

Aus der Ordnung der Siphonaptera z.B. Ctenocephalides canis, Ctenocephalides felis, Pulex irritans, Tunga penetrans, Xenopsylla cheopis.

Aus der Ordnung der Hymenoptera z.B. Camponotus herculeanus, Lasius fuliginosus, Lasius niger, Lasius umbratus, Monomorium pharaonis, Paravespula spp., Tetramorium caespitum.

Aus der Ordnung der Anoplura z.B. Pediculus humanus capitis, Pediculus humanus corporis, Pemphigus spp., Phylloera vastatrix, Phthirus pubis.

Aus der Ordnung der Heteroptera z.B. Cimex hemipterus, Cimex lectularius, Rhodinus prolixus, Triatoma infestans.

Die Anwendung im Bereich der Haushaltsinsektizide erfolgt allein oder in Kombination mit anderen geeigneten Wirkstoffen wie Phosphorsäureestern, Carbamaten, Pyrethroiden, Neonicotinoiden, Wachstumsregulatoren oder Wirkstoffen aus anderen bekannten Insektizidklassen.

Die Anwendung erfolgt in Aerosolen, drucklosen Sprühmitteln, z.B. Pump- und Zerstäubersprays, Nebelautomaten, Foggern, Schäumen, Gelen, Verdampferprodukten mit Verdampferplättchen aus Cellulose oder Kunststoff, Flüssigverdampfern, Gel- und Membranverdampfern, propellergetriebenen Verdampfern, energielosen bzw. passiven Verdampfungssystemen, Mottenpapieren, Mottensäckchen und Mottengelen, als Granulate oder Stäube, in Streuködern oder Köderstationen.

Enthalten die erfindungsgemäßen Zusammensetzungen mindestens einen fungiziden Wirkstoff, so besitzen sie sehr gute fungizide Eigenschaften und lassen sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Beispielhaft, aber nicht begrenzend, seien einige Erreger von pilzlichen Erkrankungen, die unter die oben aufgezählten Oberbegriffe fallen, genannt:
Erkrankungen, hervorgerufen durch Erreger des Echten Mehltaus wie z.B.
Blumeria-Arten, wie beispielsweise Blumeria graminis;
Podosphaera-Arten, wie beispielsweise Podosphaera leucotricha;
Sphaerotheca-Arten, wie beispielsweise Sphaerotheca fuliginea;
Uncinula-Arten, wie beispielsweise Uncinula necator;
Erkrankungen, hervorgerufen durch Erreger von Rostkrankheiten wie z.B.
Gymnosporangium-Arten, wie beispielsweise Gymnosporangium sabinae
Hemileia-Arten, wie beispielsweise Hemileia vastatrix;
Phakopsora-Arten, wie beispielsweise Phakopsora pachyrhizi und Phakopsora meibomiae;
Puccinia-Arten, wie beispielsweise Puccinia recondita oder Puccinia triticina;
Uromyces-Arten, wie beispielsweise Uromyces appendiculatus;
Erkrankungen, hervorgerufen durch Erreger der Gruppe der Oomyceten wie z.B.
Bremia-Arten, wie beispielsweise Bremia lactucae;
Peronospora-Arten, wie beispielsweise Peronospora pisi oder P. brassicae;
Phytophthora-Arten, wie beispielsweise Phytophthora infestans;
Plasmopara-Arten, wie beispielsweise Plasmopara viticola;
Pseudoperonospora-Arten, wie beispielsweise Pseudoperonospora humuli oder
Pseudoperonospora cubensis;
Pythium-Arten, wie beispielsweise Pythium ultimum;
Blattfleckenkrankheiten und Blattwelken, hervorgerufen durch z.B.
Alternaria-Arten, wie beispielsweise Alternaria solani;
Cercospora-Arten, wie beispielsweise Cercospora beticola;
Cladiosporum-Arten, wie beispielsweise Cladiosporium cucumerinum;
Cochliobolus-Arten, wie beispielsweise Cochliobolus sativus
(Konidienform: Drechslera, Syn: Helminthosporium);
Colletotrichum-Arten, wie beispielsweise Colletotrichum lindemuthanium;
Cycloconium-Arten, wie beispielsweise Cycloconium oleaginum;
Diaporthe-Arten, wie beispielsweise Diaporthe citri;
Elsinoe-Arten, wie beispielsweise Elsinoe fawcettii;
Gloeosporium-Arten, wie beispielsweise Gloeosporium laeticolor;
Glomerella-Arten, wie beispielsweise Glomerella cingulata;
Guignardia-Arten, wie beispielsweise Guignardia bidwelli;
Leptosphaeria-Arten, wie beispielsweise Leptosphaeria maculans;
Magnaporthe-Arten, wie beispielsweise Magnaporthe grisea;
Mycosphaerella-Arten, wie beispielsweise Mycosphaerella graminicola;
Phaeosphaeria-Arten, wie beispielsweise Phaeosphaeria nodorum;
Pyrenophora-Arten, wie beispielsweise Pyrenophora teres;
Ramularia-Arten, wie beispielsweise Ramularia collo-cygni;
Rhynchosporium-Arten, wie beispielsweise Rhynchosporium secalis;
Septoria-Arten, wie beispielsweise Septoria apii;
Typhula-Arten, wie beispielsweise Typhula incarnata;
Venturia-Arten, wie beispielsweise Venturia inaequalis;
Wurzel- und Stengelkrankheiten, hervorgerufen durch z.B.
Corticium-Arten, wie beispielsweise Corticium graminearum;
Fusarium-Arten, wie beispielsweise Fusarium oxysporum;
Gaeumannomyces-Arten, wie beispielsweise Gaeumannomyces graminis;
Rhizoctonia-Arten, wie beispielsweise Rhizoctonia solani;
Tapesia-Arten, wie beispielsweise Tapesia acuformis;
Thielaviopsis-Arten, wie beispielsweise Thielaviopsis basicola;
Ähren- und Rispenerkrankungen (inklusive Maiskolben), hervorgerufen durch z.B.
Alternaria-Arten, wie beispielsweise Alternaria spp.;
Aspergillus-Arten, wie beispielsweise Aspergillus flavus;
Cladosporium-Arten, wie beispielsweise Cladosporium spp.;
Claviceps-Arten, wie beispielsweise Claviceps purpurea;
Fusarium-Arten, wie beispielsweise Fusarium culmorum;
Gibberella-Arten, wie beispielsweise Gibberella zeae;
Monographella-Arten, wie beispielsweise Monographella nivalis;
Erkrankungen, hervorgerufen durch Brandpilze wie z.B.
Sphacelotheca-Arten, wie beispielsweise Sphacelotheca reiliana;
Tilletia-Arten, wie beispielsweise Tilletia caries;
Urocystis-Arten, wie beispielsweise Urocystis occulta;
Ustilago-Arten, wie beispielsweise Ustilago nuda;
Fruchtfäule hervorgerufen durch z.B.
Aspergillus-Arten, wie beispielsweise Aspergillus flavus;
Botrytis-Arten, wie beispielsweise Botrytis cinerea;
Penicillium-Arten, wie beispielsweise Penicillium expansum;
Sclerotinia-Arten, wie beispielsweise Sclerotinia sclerotiorum;
Verticilium-Arten, wie beispielsweise Verticilium alboatrum;
Samen- und bodenbürtige Fäulen und Welken, sowie Sämlingserkrankungen, hervorgerufen durch z.B.
Fusarium-Arten, wie beispielsweise Fusarium culmorum;
Phytophthora Arten, wie beispielsweise Phytophthora cactorum;
Pythium-Arten, wie beispielsweise Pythium ultimum;
Rhizoctonia-Arten, wie beispielsweise Rhizoctonia solani;
Scierotium-Arten, wie beispielsweise Scierotium rolfsii;
Krebserkrankungen, Gallen und Hexenbesen, hervorgerufen durch z.B.
Nectria-Arten, wie beispielsweise Nectria galligena;
Welkeerkrankungen hervorgerufen durch z.B.
Monilinia-Arten, wie beispielsweise Monilinia laxa;
Deformationen von Blättern, Blüten und Früchten, hervorgerufen durch z.B.
Taphrina-Arten, wie beispielsweise Taphrina deformans;
Degenerationserkrankungen holziger Pflanzen, hervorgerufen durch z.B.
Esca-Arten, wie beispielsweise Phaemoniella clamydospora;
Blüten- und Samenerkrankungen, hervorgerufen durch zB.
Botrytis-Arten, wie beispielsweise Botrytis cinerea;
Erkrankungen von Pflanzenknollen, hervorgerufen durch z.B.
Rhizoctonia-Arten, wie beispielsweise Rhizoctonia solani;
Erkrankungen, hervorgerufen durch bakterielle Erreger wie z.B.
Xanthomonas-Arten, wie beispielsweise Xanthomonas campestris pv. oryzae;
Pseudomonas-Arten, wie beispielsweise Pseudomonas syringae pv. lachrymans;
Erwinia-Arten, wie beispielsweise Erwinia amylovora;

Bevorzugt können die folgenden Krankheiten von Soja-Bohnen bekämpft werden:
Pilzkrankheiten an Blättern, Stängeln, Schoten und Samen verursacht durch z.B.
Alternaria leaf spot (Alternaria spec. atrans tenuissima), Anthracnose (Colletotrichum gloeosporoides dematium var. truncatum), Brown spot (Septoria glycines), Cercospora leaf spot and blight (Cercospora kikuchii), Choanephora leaf blight (Choanephora infundibulifera trispora (Syn.)), Dactuliophora leaf spot (Dactuliophora glycines), Downy Mildew (Peronospora manshurica), Drechslera blight (Drechslera glycini), Frogeye Leaf spot (Cercospora sojina), Leptosphaerulina Leaf Spot (Leptosphaerulina trifolii), Phyllostica Leaf Spot (Phyllosticta sojaecola), Powdery Mildew (Microsphaera diffusa), Pyrenochaeta Leaf Spot (Pyrenochaeta glycirles), Rhizoctonia Aerial, Foliage, and Web Blight (Rhizoctonia solani), Rust (Phakopsora pachyrhizi), Scab (Sphaceloma glycines), Stemphylium Leaf Blight (Stemphylium botryosum), Target Spot (Corynespora cassiicola)
Pilzkrankheiten an Wurzeln und der Stängelbasis verursacht durch z.B.
Black Root Rot (Calonectria crotalariae), Charcoal Rot (Macrophomina phaseolina), Fusarium Blight or Wilt, Root Rot, and Pod and Collar Rot (Fusarium oxysporum, Fusarium orthoceras, Fusarium semitectum, Fusarium equiseti), Mycoleptodiscus Root Rot (Mycoleptodiscus terrestris), Neocosmospora (Neocosmopspora vasinfecta), Pod and Stem Blight (Diaporthe phaseolorum), Stem Canker (Diaporthe phaseolorum var. caulivora), Phytophthora Rot (Phytophthora megasperma), Brown Stem Rot (Phialophora gregata), Pythium Rot (Pythium aphanidermatum, Pythium irregulare, Pythium debaryanum, Pythium myriotylum, Pythium ultimum), Rhizoctonia Root Rot, Stem Decay, and Damping-Off (Rhizoctonia solani), Sclerotinia Stem Decay (Sclerotinia sclerotiorum), Sclerotinia Southern Blight (Sclerotinia rolfsii), Thielaviopsis Root Rot (Thielaviopsis basicola).

Die folgenden Herstellungs- und Anwendungsbeispiele erläutern die Erfindung, ohne sie in irgendeiner Weise zu beschränken.

### Herstellungsbeispiele

Zur Herstellung eines Suspensionskonzentrates werden erst alle flüssigen Komponenten miteinander vermischt. Im nächsten Schritt werden die Feststoffe zugegeben und so lange gerührt, bis eine homogene Suspension entsteht. Die homogene Suspension wird zunächst einer Grob- und dann einer Feinmahlung unterworfen, so dass man eine Suspension enthält, in der 90% der Feststoffpartikel eine Teilchengröße unterhalb von 10 µm aufweisen. Anschließend fügt man unter Rühren bei Raumtemperatur Kelzan® S und Wasser hinzu. Es wird ein homogenes Suspensionskonzentrat erhalten.

**Tabelle 1: Zusammensetzungen erfindungsgemäßer Formulierungen (Gew.-%)**

| | **Beispiel** | | | | | | | | | |
|---|---|---|---|---|---|---|---|---|---|---|
| | 1 | 2 | 3 | 4 | 5 | 6 | 7 | 8 | 9 | 10 |
| Imidacloprid | 18,7 | 18,7 | | | 18,7 | 31,3 | 31,3 | | 4,4 | 10,6 |
| Spirotetramat | | | 18,7 | | | | | | 4,4 | 10,6 |
| Thiacloprid | | | | 18,7 | | | | 22,2 | | |
| Crovol® CR 70 G | 10 | 15 | 10 | 10 | | 7,5 | 10 | 10 | 20 | 15 |
| Cenapol® C 100 | | | | | 7,5 | | | | | |
| Synergen® GL 5 | 5 | 5 | 5 | 5 | 5 | 5 | 5 | 5 | 5 | 5 |
| Glyzerin | 5 | 5 | 5 | 5 | 5 | | | | 5 | 5 |
| Emulgator PS 29 | 4 | 4 | 4 | 4 | 4 | | | | | |
| Atlox® 4913 | | | | | | 4,5 | 4,5 | 4,5 | 3 | 3 |
| Emulgator PS 54 | | | | | | 1,5 | 1,5 | 1,5 | 3 | 3 |
| Kelzan® S | 0,2 | 0,2 | 0,2 | 0,2 | 0,2 | 0,3 | 0,3 | 0,2 | 0,2 | 0,2 |
| Preventol® D7 | 0,08 | 0,08 | 0,08 | 0,08 | 0,08 | 0,08 | 0,08 | 0,08 | 0,08 | 0,08 |
| Proxel® GXL | 0,12 | 0,12 | 0,12 | 0,12 | 0,12 | 0,12 | 0,12 | 0,12 | 0,12 | 0,12 |
| Silfoam® SRE | 0,1 | 0,1 | 0,1 | 0,1 | 0,1 | 0,1 | 0,1 | 0,1 | 0,1 | 0,1 |
| Zitronensäure | 0,1 | 0,1 | 0,1 | 0,1 | 0,1 | 0,1 | 0,1 | 0,1 | 0,2 | 0,2 |
| Wasser | 56,7 | 51,7 | 56,7 | 56,7 | 59,2 | 49,5 | 47 | 56,2 | 54,5 | 47,1 |

### Vergleichsbeispiele

Zur Herstellung von Vergleichsbeispielen, die jeweils nur Penetrationsförderer oder Adjuvans enthalten, werden erst alle flüssigen Komponenten miteinander vermischt. Im nächsten Schritt werden die Feststoffe zugegeben und so lange gerührt, bis eine homogene Suspension entsteht. Die homogene Suspension wird zunächst einer Grob- und dann einer Feinmahlung unterworfen, so dass man eine Suspension enthält, in der 90% der Feststoffpartikel eine Teilchengröße unterhalb von 10 µm aufweisen. Anschließend fügt man unter Rühren bei Raumtemperatur Kelzan® S und Wasser hinzu. Es wird ein homogenes Suspensionskonzentrat erhalten.

**Tabelle 2: Zusammensetzungen der Vergleichsformulierungen (Gew.-%)**

| | Vergleichsbeispiel | |
|---|---|---|
| | 1 | 2 |
| Imidacloprid | 18,7 | 18,7 |
| Crovol® CR 70 G | 10 | |
| Synergen® GL 5 | | 5 |
| Glyzerin | 10 | 5 |
| Emulgator PS® 29 | 4 | 4 |
| Kelzan® S | 0,6 | 0,2 |
| Preventol® D7 | 0,08 | 0,08 |
| Proxel® GXL | 0,12 | 0,12 |
| Silfoam® SRE | 0,1 | 0,1 |
| Zitronensäure | 0,1 | 0,1 |
| Wasser | 56,3 | 66,7 |

### Lagerstabilität der erfindungsgemäße Formulierungen

Zur Untersuchung der Lagerstabilität wurden 100 ml Formulierung acht Wochen unter wechselnden Temperaturbedingungen (TW) und bei 54°C gelagert. Die wechselnden Temperaturbedingungen sind 48 Stunden bei 30 °C, Absenken der Temperatur in 22,5 Stunden mit 2 °C / Stunde bis - 15 °C, 75 Stunden bei - 15 °C, in 22, Erhöhen der Temperatur über 5 Stunden mit 2 °C / Stunde bis 30°C. Anschließend an die Lagerung wird die Probe auf Raumtemperatur gebracht und Dispergierbarkeit, Partikelgröße und Viskosität werden überprüft.

Die Dispergierbarkeit (DISP) wird bestimmt nach der CIPAC MT 180 Methode, die Partikelgröße (d90, (Part)) wird gemessen auf einem Malvem Mastersizer 2000, und die dynamische Viskosität (Visk) wird bei 20 s⁻¹ auf einem RheoStress RS 150 der Firma Haake gemessen.

**Tabelle 3: Lagerstabilität der erfindungsgemäße Formulierungen**

| | Startwert | | | 8 Wochen 54°C | | | 8 Wochen TW | | |
|---|---|---|---|---|---|---|---|---|---|
| | DISP in % | Part in µm | Visk / mPas | DISP In % | Part in µm | Visk / mPas | DISP In% | Part in µm | Visk / mPas |
| Beispiel 1 | 0 | 4,8 | 62 | 0 | 8,6 | 54 | 0 | 5,1 | 57 |
| Beispiel 2 | 0,1 | 3,4 | 185 | 0,1 | 7,2 | 156 | 0,1 | 5,5 | 181 |
| Beispiel 3 | 0,1 | 2,4 | 95 | 0,1 | 3,0 | 78 | 0,1 | 2,5 | 91 |
| Beispiel 4 | 0,1 | 5,8 | 179 | 0,1 | 8,0 | 178 | 0,1 | 6,5 | 169 |

### Bestimmung der biologischen Wirkung verschiedener Imidacloprid / Adjuvans Kombinationen

In diesem Test wurde die Penetration von Wirkstoffen durch enzymatisch isolierte Kutikeln von Apfelbaumblättern gemessen.

Verwendet wurden Blätter, die in voll entwickeltem Zustand von Apfelbäumen der Sorte Golden Delicious abgeschnitten wurden. Die Isolierung der Kutikeln erfolgte in der Weise, dass
- zunächst auf der Unterseite mit Farbstoff markierte und ausgestanzte Blattscheiben mittels Vakuuminfiltration mit einer auf einen pH-Wert zwischen 3 und 4 gepufferten Pectinase-Lösung (0,2 bis 2 %ig) gefüllt wurden,
- dann Natriumazid hinzugefügt wurde und
- die so behandelten Blattscheiben bis zur Auflösung der ursprünglichen Blattstruktur und zur Ablösung der nicht zellulären Kutikula stehen gelassen wurden.

Danach wurden nur die von Spaltöffnungen und Haaren freien Kutikeln der Blattoberseiten weiter verwendet. Sie wurden mehrfach abwechselnd mit Wasser und einer Pufferlösung vom pH-Wert 7 gewaschen. Die erhaltenen sauberen Kutikel wurden schließlich auf Teflonplättchen aufgezogen und mit einem schwachen Luftstrahl geglättet und getrocknet.

Im nächsten Schritt wurden die so gewonnenen Kutikelmembranen für Membran-Transport-Untersuchungen in Diffusionszellen (= Transportkammern) aus Edelstahl eingelegt. Dazu wurden die Kutikeln mit einer Pinzette mittig auf die mit Silikonfett bestrichenen Ränder der Diffusionszellen plaziert und mit einem ebenfalls gefetteten Ring verschlossen. Die Anordnung war so gewählt worden, dass die morphologische Außenseite der Kutikeln nach außen, also zur Luft, gerichtet war, während die ursprüngliche Innenseite dem Inneren der Diffusionszelle zugewandt war.

Die Diffusionszellen waren mit einer 1%igen Phospholipidsuspension befüllt. Zur Bestimmung der Penetration wurden jeweils 10 µl der Spritzbrühe der nachstehenden Zusammensetzung mit radioaktiv markiertem Wirkstoff in den angegebenen Konzentrationen auf die Außenseite der Kutikula appliziert. Das Ansetzen der Spritzbrühe erfolgt mit lokalem Leitungswasser mittlerer Wasserhärte.

Nach dem Auftragen der Spritzbrühen ließ man das Wasser verdunsten, drehte die Kammern um und stellte sie in thermostatisierte Wannen, in denen die Temperatur und Luftfeuchte über der Kutikula durch einen leichten Luftstrom auf die Kutikula mit dem Spritzbelag einstellbar war (20°C, 60 % rh). In regelmäßigen Abständen wurden von einem Autosampler Aliquots entnommen und im Szintillationszähler gemessen.

Es zeigt sich hierbei, dass erfindungsgemäße Zusammensetzungen eine Penetration des Wirkstoffs in überadditiver (synergistischer) Weise gegenüber den Vergleichsbeispielen zeigen, bei denen nur jeweils entweder Penetrationsförderer oder Adjuvans vorhanden ist.

**Tabelle 4: Synergistische Wirkung der erfindungsgemäße Formulierungen**

| | Penetration/ % | | | | | |
|---|---|---|---|---|---|---|
| | (0,2 g Imidacloprid /l) | | | (0,5 g Imidacloprid /l) | | |
| | Nach 3 Stunden | Nach 9 Stunden | Nach 24 Stunden | Nach 3 Stunden | Nach 9 Stunden | Nach 24 Stunden |
| Beispiel 1 | 6,9 | 18,3 | 33,5 | 4,4 | 14,5 | 27,3 |
| Vergleichsbeispiel 1 | 2,4 | 6,0 | 12,2 | 1,4 | 5,1 | 10,8 |
| Vergleichsbeispiel 2 | 1,1 | 3,0 | 5,7 | 1,8 | 5,4 | 10,0 |

### Testbeschreibung: Penetrationsförderer auf der Ebene der Kutikula

Additive, die als Penetrationsförderer auf der Ebene der Kutikula wirken, seien nachfolgend als Akzelerator-Additive bezeichnet (vgl. Schönherr und Baur, 1994, Pesticide Science 42, 185-208). Akzelerator-Additive zeichnen sich dadurch aus, dass sie aus der wässrigen Spritzbrühe und/oder aus dem Spritzbelag in die Kutikula eindringen und dadurch die Stoffbeweglichkeit (Mobilität) von Wirkstoffen In der Kutikula erhöhen können. Andere Additive wie Polyethylenglykol wirken dagegen nur im Spritzbelag (über die Flüssigphase) oder wirken nur als Netzmittel wie z.B. Natriumdodecylsulfat.

In diesem Test wird der Einfluß von Additiven auf die Penetrationseigenschaften anderer Substanzen auf der Ebene der Kutikula bestimmt. Dabei wird die Mobilität einer Testsubstanz in der Kutikula ohne und mit einem Additiv über eine Desorptionsmethode gemessen. Die Methode ist detailliert in der Literatur veröffentlicht (Baur et al., 1997, Pesticide Science, 51, 131-152) und lediglich die Prinzipien und Abweichungen werden nachfolgend beschrieben.

Als Testsubstanz mit der Funktion eines Tracers wurde hier eine radioaktiv markierte schwache organische Säure ausgewählt. Als Pflanzenmaterial wurden die enzymatisch isolierten Blattkutikeln der Oberseite von Birnenblättern von Freilandbäumen verwendet. Die Kutikeln wurden in speziell angefertigte Diffusionszellen aus Edelstahl eingebaut. Der Tracer wurde in einem Citratpuffer bei pH 3 in gelöstem Zustand auf die ursprünglich dem Blattinneren zugewandten Seite appliziert. Diese Innenseite nimmt die kleine radioaktive Menge des Tracers in der nicht dissoziierten Säureform leicht auf. Anschließend wurde diese Innenseite abgedeckt und bei 100% Luftfeuchte gehalten. Die normalerweise luftexponierte, morphologische Aussenseite der Blattkutikula wurde dann mit einem Puffer (pH7), der Rezeptorlösung in Kontakt gebracht und die Desorption gestartet. Die penetrierte Säureform der Testsubstanz wird durch den Rezeptor dissoziiert und die Desorption erfolgt einer Kinetik erster Ordnung. Die Desorptionskonstante ist proportional der Mobilität des Tracers in der Kutikula.

## Patentansprüche

1. Zusammensetzung enthaltend
- mindestens einen bei Raumtemperatur festen systemischer Wirkstoff,
- mindestens einen Penetrationsförderer,
- mindestens ein Adjuvans aus der Gruppe der Polyglyzerine oder Polyglyzerinderivate,

2. Zusammensetzung nach Anspruch 1, wobei als Penetrationsförderer mindestens eine Verbindung der Formel (XI)
R³-O-(-AO)ₘR⁴ (XI)
in welcher
R³ für geradkettiges oder verzweigtes Alkyl mit 4 bis 20 Kohlenstoffatomen steht,
R⁴ für H, Methyl, Ethyl, n-Propyl, i-Propyl, n-Butyl, i-Butyl, t-Butyl, n-Pentyl oder n-Hexyl steht,
AO für einen Ethylenoxid-Rest, einen Propylenoxid-Rest, einen Butylenoxid-Rest oder für Gemische aus Ethylenoxid- und Propylenoxid-Resten oder Butylenoxid-Resten steht und
m für Zahlen von 2 bis 30 steht,
und/oder
mindestens ein Polyalkoxytriglyzerid enthalten ist.

3. Zusammensetzung nach Anspruch 1 oder 2, enthaltend
- zwischen 1 und 60 Gew.-% von mindestens einem agrochemischen Wirkstoff,
- zwischen 1 und 50 Gew.% mindestens eines Penetrationsförderers,
- zwischen 1 und 25 Gew.-% mindestens eines Adjuvans aus der Gruppe der Polyglyzerine oder Polyglyzerinderivate,
- zwischen 1 und 20 Gew.-% mindestens eines nicht-ionischen und/oder mindestens eines anionischen Tensids,
- zwischen 0,1 und 25 Gew.-% an Zusatzstoffen aus den Gruppen der schaumhemmenden Mittel, der Konservierungsmittel, der Antioxidantien, der Spreitmittel, der Farbstoffe und/oder der Verdicker.

4. Zusammensetzung nach einem oder mehreren der Ansprüche 1 bis 3 enthaltend Imidacloprid, Spirotetramat und/oder Thiacloprid.

5. Verwendung einer Zusammensetzung nach einem oder mehreren der Ansprüche 1 bis 4 zur Bekämpfung von tierischen Schädlingen oder phytopathogenen Pilzen, **dadurch gekennzeichnet, dass** eine wirksame Menge der enthaltenen Wirkstoffe auf tierische Schädlinge, ihren Lebensraum oder Pflanzen appliziert wird.

6. Verfahren zur Bekämpfung von tierischen Schädlingen oder phytopathogenen Pilzen, **dadurch gekennzeichnet, dass** eine Zusammensetzung nach einem oder mehreren der Ansprüche 1 bis 4 verdünnt oder unverdünnt so auf tierische Schädlinge, ihren Lebensraum oder Pflanzen appliziert wird, dass eine wirksame Menge der enthaltenen Wirkstoffe ausgebracht wird.
